(19) Europäisches Patentamt
European Patent Office
Office européen des brevets

(11) EP 3 546 487 A1

(12) EUROPEAN PATENT APPLICATION
published in accordance with Art. 153(4) EPC

(43) Date of publication:
02.10.2019 Bulletin 2019/40

(21) Application number: 17873484.4

(22) Date of filing: 24.11.2017

(51) Int Cl.:
*C08F 8/32* (2006.01) *C08F 20/32* (2006.01)
*C08G 8/28* (2006.01) *C09D 5/16* (2006.01)
*C09D 7/40* (2018.01) *C09D 133/00* (2006.01)
*C09D 161/10* (2006.01)

(86) International application number:
PCT/JP2017/042272

(87) International publication number:
WO 2018/097260 (31.05.2018 Gazette 2018/22)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 25.11.2016 JP 2016229585
15.06.2017 JP 2017118169

(71) Applicants:
- Waseda University
Tokyo 169-8050 (JP)
- Mitsubishi Chemical Corporation
Tokyo 100-8251 (JP)

(72) Inventors:
- SUGA Takeo
Tokyo 169-8050 (JP)
- NISHIDE Hiroyuki
Tokyo 169-8050 (JP)
- KATSUMATA Sho
Tokyo 100-8251 (JP)
- TANIGUCHI Kana
Tokyo 100-8251 (JP)
- NAKAMURA Junichi
Tokyo 100-8251 (JP)
- IWASAKI Tomokazu
Tokyo 100-8251 (JP)

(74) Representative: Hoffmann Eitle
Patent- und Rechtsanwälte PartmbB
Arabellastraße 30
81925 München (DE)

# (54) POLYMER, RESIN COMPOSITION, ANTIFOULING COATING MATERIAL COMPOSITION, METHOD FOR PRODUCING POLYMER, METHOD FOR FORMING STRUCTURE FOR STABILIZING CARBAMATE ON SURFACE OF COATING FILM, AND METHOD FOR REGENERATING STRUCTURE FOR STABILIZING CARBAMATE ON SURFACE OF COATING FILM

(57) Provided are a polymer, a resin composition, and an antifouling coating material composition which are capable of forming a coating film having both of water resistance and antifouling properties resulting from superhydrophilicity; a method for producing the polymer; a method for forming a structure for stabilizing a carbamate on a surface of a coating film using the polymer; and a method for regenerating a structure for stabilizing a carbamate on a surface of a coating film using the polymer. The polymer having a structure which reacts with CO2 in the presence of water and stabilizes a formed carbamate, in which Expression (1) is satisfied.

$$\text{Contact angle in water after reaction with } CO_2 - \text{contact angle in water before reaction with } CO_2 \geq 10 \cdots \text{Expression (1)}$$

EP 3 546 487 A1

## Description

Technical Field

The present invention relates to a polymer, a resin composition, an antifouling coating material composition, a method for producing a polymer, a method for forming a structure for stabilizing a carbamate on a surface of a coating film, and a method for regenerating a structure for stabilizing a carbamate on a surface of a coating film.

Priorities are claimed on Japanese Patent Application No. 2016-229585, filed on November 25, 2016 and Japanese Patent Application No. 2017-118169, filed on June 15, 2017, the contents of which are incorporated herein by reference.

Background Art

It has been known that marine structures or ships are coated with antifouling coating materials for the purpose of preventing corrosion of a portion in contact with sea water and adhesion of marine organisms that cause a decrease in sailing speed. Typical examples of the antifouling coating materials include resins for forming a coating film and antifouling agents.

Meanwhile, it has been known that an antifouling effect can be obtained by imparting superhydrophilicity to a surface of a base material.

Patent Document 1 describes an antibacterial composition which contains a polymer, as an active component, having a constitutional unit derived from a non-crosslinked vinyl monomer and a constitutional unit represented by a specific formula and having a quaternary ammonium salt structure or a betaine type structure. It has been reported by adhesion of contaminants such as green lavers in water can be suppressed by treating a surface of a fishing net or the like using this antibacterial composition.

Non-patent Document 1 reports that a polymer brush formed by growing a zwitterionic polymer chain such as poly(phosphobetaine) or poly(sulfobetaine) from a surface of a Si substrate inhibits adhesion of various marine organisms and exhibits excellent antifouling characteristics. This polymer brush is formed by surface-initiated atom transfer radical polymerization on a Si substrate.

Citation List

Patent Document

[Patent Document 1] Japanese Unexamined Patent Application, First Publication No. H04-342504
[Patent Document 2] Japanese Unexamined Patent Application, First Publication No. 2007-77431

Non-Patent Document

[Non-patent Document 1] "Versatile inhibition of marine organism settlement by zwitterionic polymer brushes", Higaki and 5 others, Polymer Journal, 2015, 47, p. 811 to 818

Summary of Invention

Problems to be Solved by the Invention

The polymer of Patent Document 1 has a high hydrophilicity due to the quaternary ammonium salt structure or betaine type structure. Therefore, a coating film of this polymer has a high hydrophilicity and low water resistance. For example, the coating film is likely to collapse or be peeled off in sea water.

It is considered that the polymer brush in Non-patent Document 1 is unlikely to be peeled off from a substrate because the terminal thereof is bonded to the substrate. However, this polymer brush is unlikely to be produced. Further, it is difficult to apply the polymer brush to a base material having a large area.

In Patent Document 2, examination on a coating film obtained by coating a surface with a zwitterionic polymer has not been conducted. Such a coating film is considered to have a low water resistance similar to the coating film of the polymer in Patent Document 1 due to the excellent hydrophilicity of the zwitterionic polymer.

An object of the present invention is to provide a polymer, a resin composition, and an antifouling coating material composition which are capable of forming a coating film having both of water resistance and antifouling properties

resulting from superhydrophilicity; a method for producing the polymer; a method for forming a structure for stabilizing a carbamate on a surface of a coating film using the polymer; and a method for regenerating a structure for stabilizing a carbamate on a surface of a coating film using the polymer.

Means for Solving Problem

The present invention has the following aspects.

[1] A polymer having a structure which reacts with $CO_2$ in the presence of water and stabilizes a formed carbamate, in which Expression (1) is satisfied.

$$\text{Contact angle in water after reaction with } CO_2 - \text{contact angle in water before reaction with } CO_2 \geq 10 \cdots \text{Expression (1)}$$

[2] The polymer according to [1], in which the structure which reacts with $CO_2$ and stabilizes a formed carbamate is represented by Formula (1-1),

[Chem. 1]

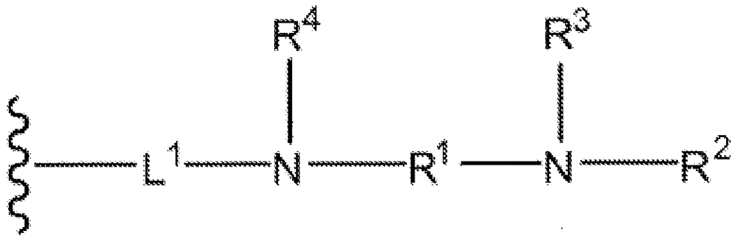

・・・ (1-1)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.

[3] The polymer according to [1], in which the structure which reacts with $CO_2$ and stabilizes a formed carbamate is represented by Formula (1-2) and/or Formula (1-3),

[Chem. 2]

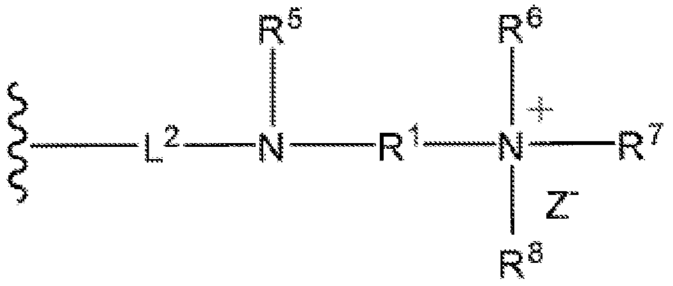

• • • (I − 2)

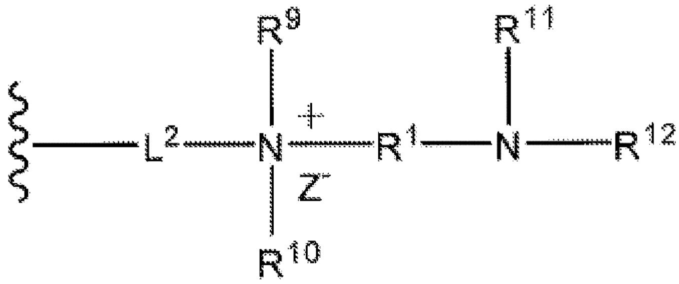

• • • (I − 3)

in the formulae, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

[4] A polymer having a structure (I) represented by Formula (1-1),

[Chem. 3]

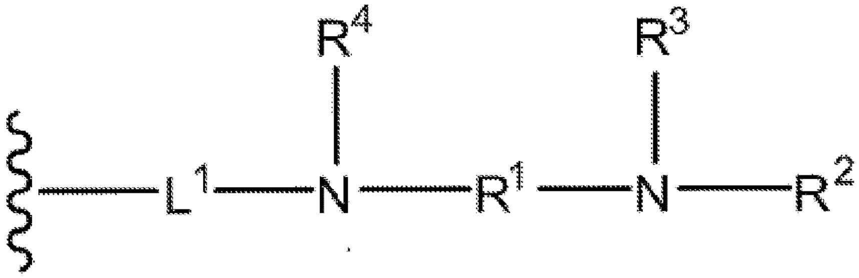

• • • (I − 1)

in the formula, $L^1$ represents an alkylene group or phenylene group each of which may have a substituent and may

be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.
[5] A polymer having a structure (I) represented by Formula (1-2) and/or Formula (I-3),

[Chem. 4]

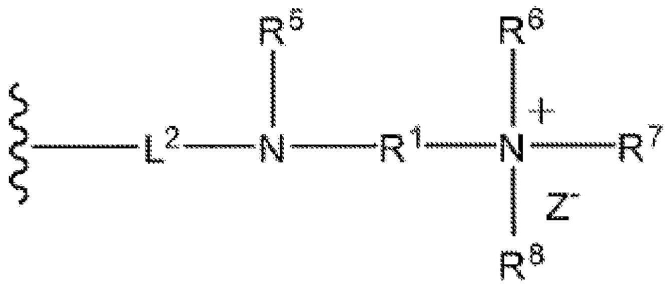

・・・(I−2)

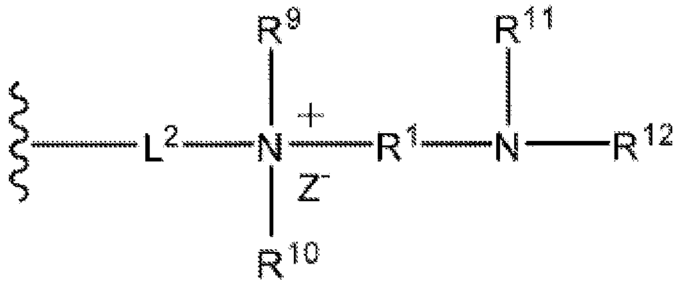

・・・(I−3)

in the formulae, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.
[6] The polymer according to [2] or [4], in which at least one of $R^2$ to $R^4$ in Formula (1-1) represents a hydrogen atom.
[7] The polymer according to any one of [1] to [6], which is a (meth)acrylic polymer or a novolac polymer.
[8] A resin composition including: the polymer according to any one of [1] to [7].
[9] An antifouling coating material composition including: the resin composition according to [8].
[10] The antifouling coating material composition according to [9], further including: an antifouling agent.

[11] The antifouling coating material composition according to [10], in which the antifouling agent contains at least one selected from the group consisting of cuprous oxide, pyridine triphenyl borane, 4,5-dichloro-2-n-octyl-4-isothiazolin-3-one, 4-bromo-2-(4-chlorophenyl)-5-(trifluoromethyl)-1H-pyrrole-3-carbonitrile, and medetomidine.
[12] The antifouling coating material composition according to any one of [9] to [11], further including: a thermoplastic resin other than the polymer.
[13] The antifouling coating material composition according to any one of [9] to [12], further including: a silicone oil.
[14] A method for producing a polymer, including: polymerizing a monomer mixture containing the following monomer (m1) to obtain the following polymer (A),
in which the polymer (A) is a polymer having a structure (I) represented by Formula (1-1) and/or (1-2) and/or (1-3), and the monomer (m1) is a monomer having the structure (I),

[Chem. 5]

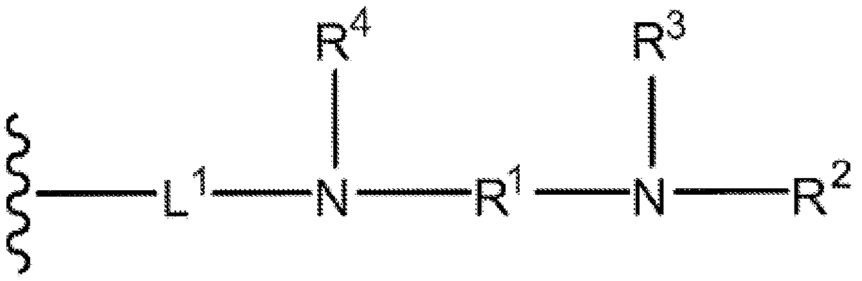

・・・(I-1)

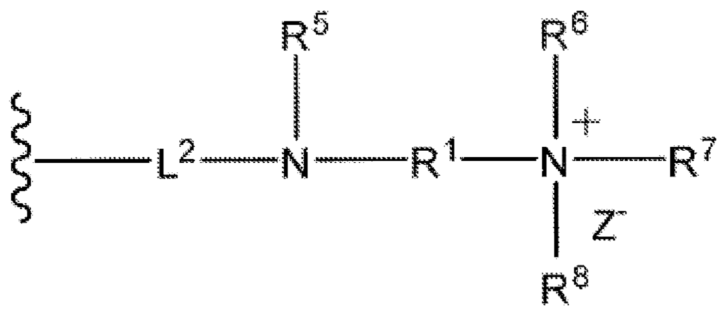

・・・(I-2)

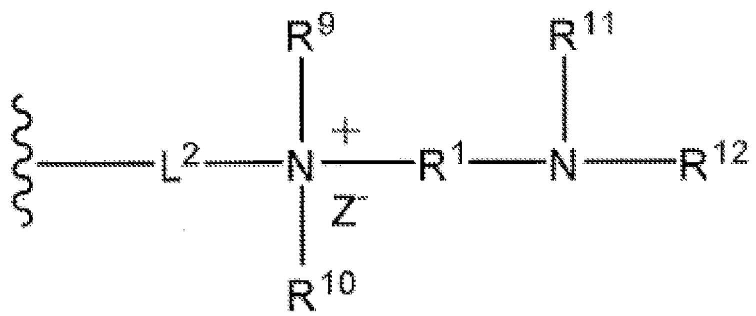

・・・(I-3)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a

case where $L^1$ represents an alkylene group or phenylene group each of which does not have a substituent, at least one of $R^2$ to $R^4$ represents an alkyl group, alkoxy group, or phenyl group each of which may have a substituent, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S-between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

[15] A method for producing a polymer, including: reacting an epoxy group of the following polymer (A0) with the following compound (1) to obtain the following polymer (A),

in which the polymer (A) is a polymer having a structure (I) represented by Formula (1-1) and/or (1-2) and/or (1-3),

the polymer (A0) is a polymer containing an epoxy group, and

the compound (1) is a compound which is capable of reacting with an epoxy group,

[Chem. 6]

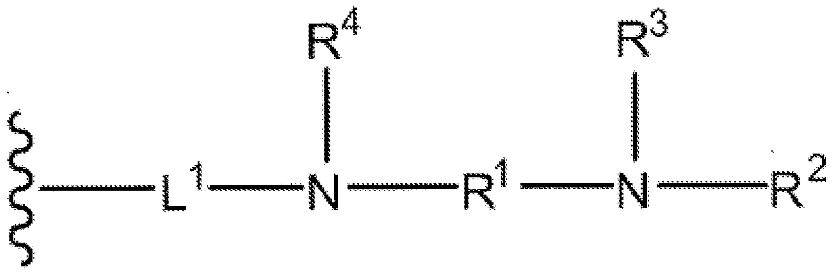

・・・(I−1)

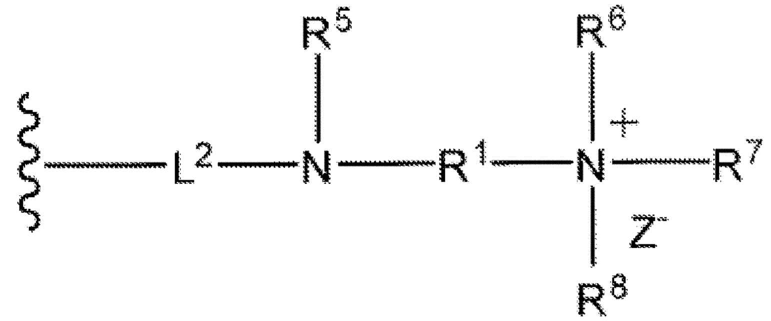

・・・(I−2)

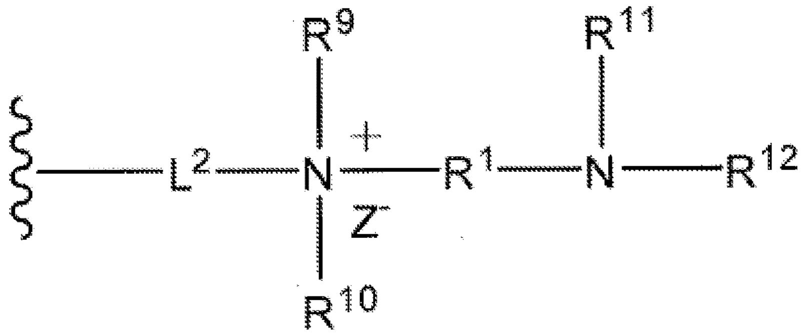

・・・(I−3)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S-between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or

phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

[16] A method for forming a structure for stabilizing a carbamate, including: reacting $CO_2$ with a surface of a coating film which contains the polymer according to any one of [1] to [7] in the presence of water.

[17] A method for regenerating a structure for stabilizing a carbamate, including: reacting $CO_2$ with a surface of a coating film in the presence of water in a case where the structure for stabilizing a carbamate which has been formed on the surface of the coating film using the method according to [16] is removed.

Effects of Invention

According to the present invention, it is possible to provide a polymer, a resin composition, and an antifouling coating material composition which are capable of forming a coating film having both of water resistance and antifouling properties resulting from superhydrophilicity; a method for producing the polymer; a method for forming a structure for stabilizing a carbamate on a surface of a coating film using the polymer; and a method for regenerating a structure for stabilizing a carbamate on a surface of a coating film using the polymer.

Mode for Carrying Out of the Invention

The following definitions of the terms apply throughout the present specification and the claims.

"(Meth)acrylic polymer" indicates a polymer in which at least a part of constitutional units are constitutional units derived from a (meth)acrylic monomer. (Meth)acrylic polymer may further have a constitutional unit derived from a monomer other than the (meth)acrylic monomer (for example, a vinyl-based monomer such as styrene).

"Constitutional unit" indicates a constitutional unit derived from a monomer formed by polymerizing a monomer or a constitutional unit which is partially changed to another structure by treating a polymer.

"Monomer" indicates a polymerizable compound (polymerizable monomer).

The concept of "polymer" includes both of a homopolymer and a copolymer.

"(Meth)acrylic monomer" indicates a monomer having a (meth)acryloyl group.

"(Meth)acryloyl group" is a generic term of an acryloyl group and a methacryloyl group. "(Meth)acrylate" is a generic term of acrylate and methacrylate. "(Meth)acrylic acid" is a generic term of acrylic acid and methacrylic acid. "(Meth)acrylonitrile" is a generic term of acrylonitrile and methacrylonitrile. "(Meth)acrylamide" is a generic term of acrylamide and methacrylamide.

[Polymer]

A first embodiment of the present invention relates to a polymer having a structure that stabilizes a carbamate to be formed in the presence of water, in which Expression (1) is satisfied.

$$\text{Contact angle in water after reaction with } CO_2 \text{ - contact angle in water before reaction with } CO_2 \geq 10 \cdots \text{Expression (1)}$$

By forming a zwitterionic structure, the hydrophilicity of the surface of the coating film is increased, the interfacial tension with water is decreased, and the wettability is increased. Further, by forming a zwitterionic structure, excellent hydrophilicity is exhibited.

In order to hydrophilize the surface layer of the coating film of the present invention so that the antifouling properties are exhibited, a structure that reacts with $CO_2$ in the presence of water and stabilizes a formed carbamate is formed on the surface of the coating film containing a polymer (A). It is preferable that the contact angle in water after the reaction with $CO_2$ on the surface of the coating film in the presence of water is greater than the contact angle in water before the reaction with $CO_2$ on the surface of the coating film containing a polymer in the presence of water.

Specifically, the contact angle in water after the reaction with $CO_2$ is greater than the contact angle in water before the reaction with $CO_2$ by preferably 10° or greater, and the contact angle in water after the reaction with $CO_2$ is more preferably 140° or greater, still more preferably 150° or greater, even still more preferably 160° or greater, and particularly preferably 165° or greater.

In a case where the contact angle in water after the reaction with $CO_2$ is greater than the water contact angle in water before the reaction with $CO_2$ by 10° or greater, the initial water resistance is excellent, and both of water resistance and antifouling properties can be achieved.

The antifouling properties are improved in a case where the contact angle in water after the reaction with $CO_2$ is greater than 140°, and further improvement of the antifouling performance is expected in a case where the contact angle in water after the reaction with $CO_2$ is greater than 160°.

Further, the contact angle in water indicates a contact angle between the surface of the coating film and air in water.

A second embodiment of the present invention relates to a polymer having a structure which reacts with $CO_2$ and stabilizes a carbamate to be formed is represented by Formula (1-1).

[Chem. 7]

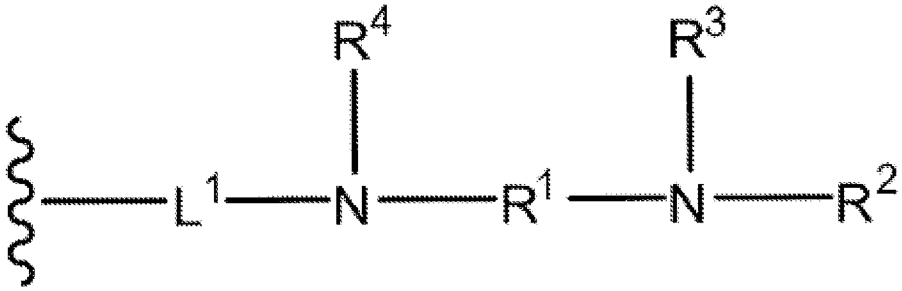

・・・ (1 − 1)

In the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.

A third embodiment of the present invention relates to a polymer having a structure which reacts with $CO_2$ and stabilizes a carbamate is represented by Formula (1-2) and/or (1-3).

[Chem. 8]

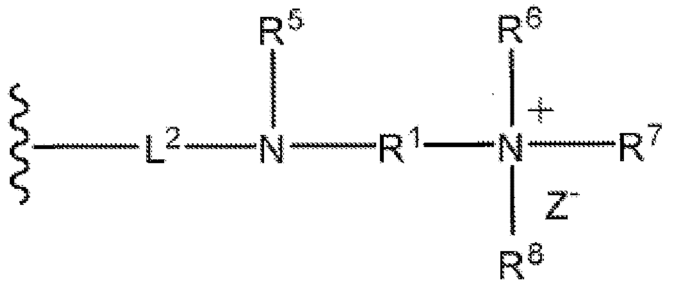

・・・(I-2)

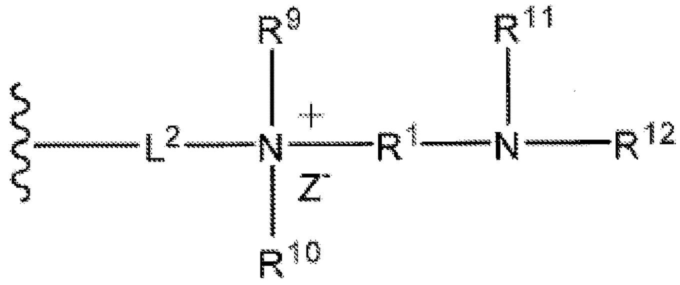

・・・(I-3)

In the formulae, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

A fourth embodiment of the present invention relates to a polymer having a structure (I) represented by Formula (1-1).

[Chem. 9]

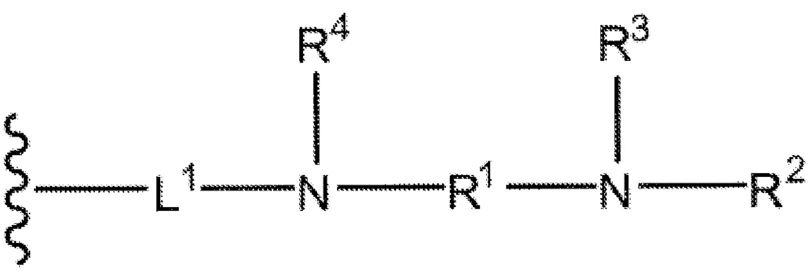

・・・(I-1)

In the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen,

an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.

A fifth embodiment of the present invention relates to a polymer having a structure (I) represented by Formula (1-2) and/or Formula (1-3).

[Chem. 10]

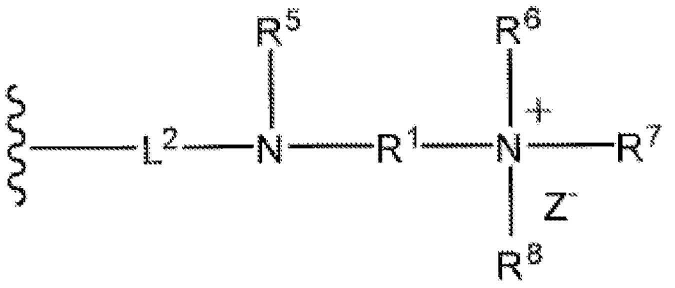

・・・(I－2)

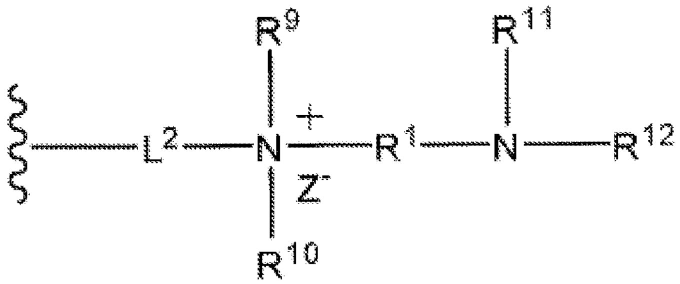

・・・(I－3)

In the formulae, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

As $L^1$ and $L^2$, the number of carbon atoms is preferably in a range of 1 to 10.

It is preferable that $R^1$ represents $(CR^{13}R^{14})_n$. Here, $R^{13}$ and $R^{14}$ each independently represent a hydrogen atom or an alkyl group which may have a substituent. It is preferable that n represents an integer of 1 to 10. In a case where n represents 2 or greater, n $R^{11}$'s and n $R^{12}$'s may be the same as or different from one another.

The number of carbon atoms of the alkyl group as $R^{13}$ and $R^{14}$ is preferably in a range of 1 to 10 and more preferably in a range of 1 to 4. Examples of the substituent which may be included in the alkyl group are the same as those exemplified as the substituent which may be included in the alkylene group.

As $(CR^{13}R^{14})_n$, $(CH_2)_n$ in which both of $R^{13}$ and $R^{14}$ represent a hydrogen atom is preferable.

n represents preferably an integer of 1 to 10 and particularly preferably 2 or 3. In a case where $CO_2$ reacts with the structure (I) in the presence of water, a reaction in which the structure (I) becomes a zwitterionic structure or a dicationic structure occurs. In a case where n represents 2 or 3, the ratio of the zwitterionic structures to the total of the zwitterionic structures and the dicationic structures which are generated from the structure (I) tends to be increased. In a case where the ratio of the zwitterionic structures is high, the hydrophilicity is high, and the antifouling properties are excellent. The reaction will be described in detail below.

The alkyl group as R2 to R4 may be linear or branched. The number of carbon atoms of the alkyl group is preferably in a range of 1 to 10 and more preferably in a range of 1 to 4. Specific examples of the alkyl group include a methyl group, an ethyl group, a propyl group, a butyl group, and a 2-ethylhexyl group.

The alkoxy group may be linear or branched. The number of carbon atoms of the alkoxy group is preferably in a range of 1 to 10 and more preferably in a range of 1 to 4. Specific examples of the alkoxy group include a methoxy group, an ethoxy group, a propoxy group, a butoxy group, and a 2-ethylhexyloxy group.

Examples of the substituent of the alkyl group, alkoxy group, or phenyl group as $R^2$ to $R^4$ include atoms or groups selected from the group consisting of an alkyl group, an aryl group, a carboxyl group, an alkoxycarbonyl group, a cyano group, a hydroxyl group, an amide group, a halogen atom, an allyl group, an epoxy group, an alkoxy group, a siloxy group, and a hydrophilic or ionic group.

Among the substituents, as the alkyl group or the alkoxy group, those described above are exemplified. As the aryl group, a phenyl group and a naphthyl group are exemplified. The alkoxy group in the alkoxycarbonyl group is the same as described above. As the alkoxycarbonyl group, a methoxycarbonyl group is exemplified. As the amide group, a carbamoyl group ($-CONH_2$), N-methylcarbamoyl group ($-CONHCH_3$), and N,N-dimethylcarbamoyl group (dimethylamide group: $-CON(CH_3)_2$) are exemplified. Examples of the halogen atom include a fluorine atom, a chlorine atom, a bromine atom, and an iodine atom. Examples of the hydrophilic or ionic group include an alkali salt of a carboxy group or an alkali salt of a sulfoxy group, a poly(alkylene oxide) group such as a polyethylene oxide group or a polypropylene oxide group, and a cationic substituent such as a quaternary ammonium base.

Two of $R^2$ to $R^4$ may be bonded to each other to form an alkylene group, a group having -O- between carbon atoms of an alkylene group, or a phenylene group. These groups may each have a substituent. Examples of the substituent are the same as those exemplified as the substituents which may be included in the alkylene group, alkoxy group, or phenyl group.

Examples of the alkylene group and the group having -O- between carbon atoms of an alkylene group formed by $R^2$ or $R^3$ and $R^4$ being bonded to each other are the same as those for $R^1$, and the preferable aspects are the same as described above.

In a case where $R^2$ and $R^3$ are bonded to each other to form an alkylene group, $(CR^{15}R^{16})_m$ is exemplified as this alkylene group. Here, $R^{15}$ and $R^{16}$ each independently represent a hydrogen atom or an alkyl group which may have a substituent, and m represents an integer of 2 to 10. m $R^{15}$'s and m $R^{16}$'s may be the same as or different from one another.

Examples of the alkyl group as $R^{15}$ and $R^{16}$ are the same as those for the alkyl group as $R^{13}$ and $R^{14}$.

m represents preferably an integer of 2 to 10 and particularly preferably an integer of 2 to 6.

In Formulae (1-2) and (1-3), the alkyl group, alkoxy group, or phenyl group each of which may have a substituent as $R^5$ to $R^{12}$ is the same as the alkyl group, alkoxy group, or phenyl group each of which may have a substituent as $R^2$ to $R^4$.

Examples of $Z^-$ include $Br^-$, $I^-$, $BF_4^-$, and $PF_6^-$. Among these, from the viewpoints of imparting the hydrophilicity and the antibacterial properties, $Br^-$ or $I^-$ is preferable.

In Formula (1-1), it is preferable that at least one of $R^2$ to $R^4$ represents a hydrogen atom. In Formulae (1-2) and (1-3), it is preferable that at least one of $R^5$, $R^{11}$, and $R^{12}$ represents a hydrogen atom. In a case where a nitrogen atom in the structure (I) is bonded to a hydrogen atom, the reaction in which the structure (I) becomes a zwitterionic structure easily proceeds.

From the viewpoint that the reaction for forming a structure for stabilizing a carbamate easily proceeds, preferred examples of the structure (I) include structures represented by Formulae (I-1-1) to (I-1-6) and (I-2-1).

[Chem. 11]

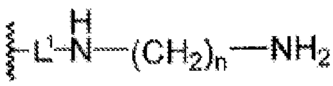

(I-1-1)

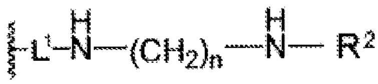

(I-1-2)

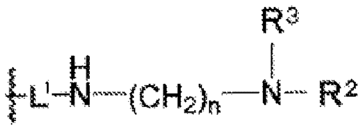

(I-1-3)

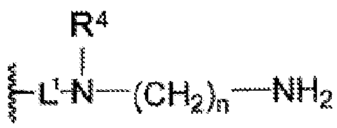

(I-1-4)

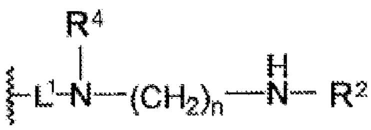

(I-1-5)

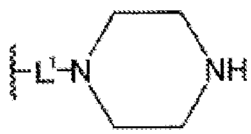

(I-1-6)

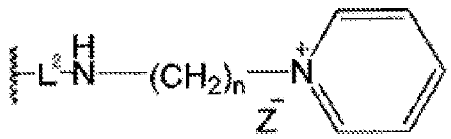

(I-2-1)

Examples of the structure (1-1) include structures represented by Formulae (I-1-a) and (I-1-b).

[Chem. 12]

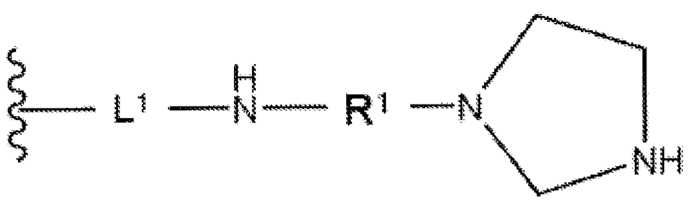

• • •(I-1-a)

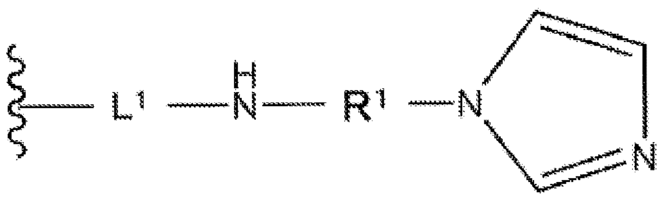

• • •(I-1-b)

In Formulae, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group. $R^1$ represents an alkylene group or a group having -O- or -S- between carbon atoms of an alkylene group each of which may have a substituent.

Preferred examples of the structure (1-2) include structures represented by Formulae (I-2-a) to (I-2-e).

[Chem. 13]

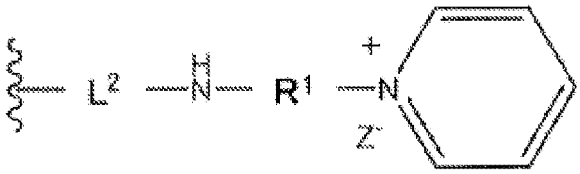

・・・(I-2-a)

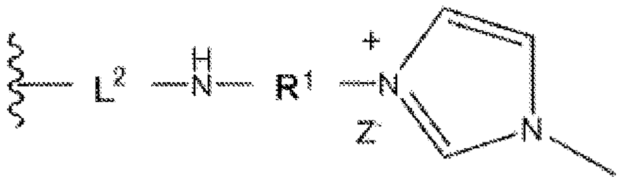

・・・(I-2-b)

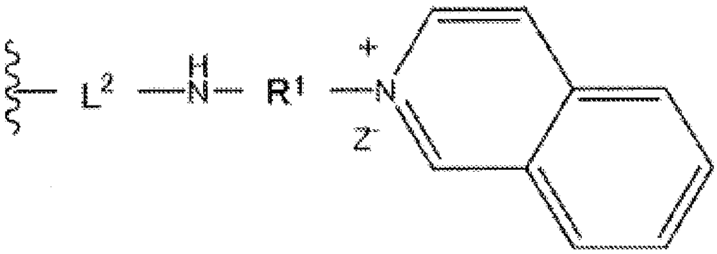

・・・(I-2-c)

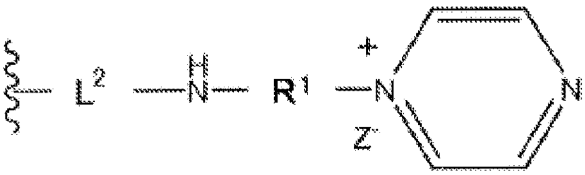

・・・(I-2-d)

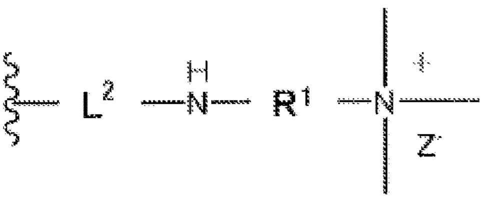

・・・(I-2-e)

$L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group. $R^1$ represents an alkylene group or a group having -O- or -S- between carbon atoms of an alkylene group each of which may have a substituent.

Examples of the structure (1-3) include structures represented by Formulae (I-3-a) to (I-3-f).

[Chem. 14]

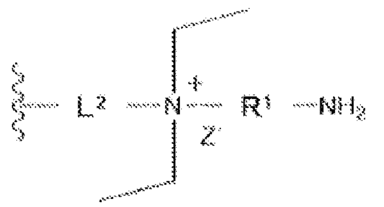

••• (I-3-a)

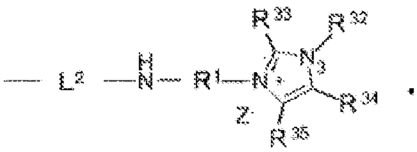

••• (I-3-b)

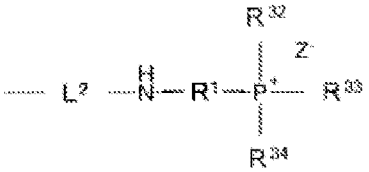

••• (I-3-f)

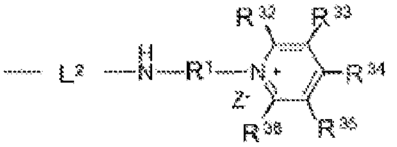

••• (I-3-c)

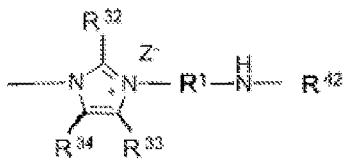

••• (I-3-d)

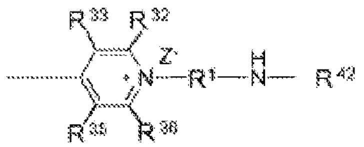

••• (I-3-e)

In Formulae, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group. $R^1$ represents an alkylene group or a group having -O- or -S- between carbon atoms of an alkylene group each of which may have a substituent. $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group.

In Formula (I-3-b), $R^{32}$ represents an alkyl group, and $R^{33}$ to $R^{35}$ represent a hydrogen atom or an alkyl group. In Formula (I-3-c), $R^{32}$ to $R^{35}$ represent a hydrogen atom or an alkyl group. In Formula (I-3-d), $R^{32}$ to $R^{34}$ represent a hydrogen atom or a phenyl group, and $R^{42}$ represents a hydrogen atom or an alkyl group. In Formula (I-3-e), $R^{32}$ to $R^{36}$ represent a hydrogen atom or a phenyl group, and $R^{42}$ represents a hydrogen atom or an alkyl group. In Formula (I-3-f), $R^{32}$ to $R^{34}$ represent an alkyl group or a phenyl group. n and $Z^-$ are the same as described above.

The number of kinds of the structures (I) included in the polymer (A) may be one or two or more. For example, the polymer (A) may include any of the structures represented by Formula (1-1) and/or Formula (1-2) and/or Formula (1-3).

The structure (I) may be included in the constitutional unit, the terminal of the main chain, between the main chains, or any of these of the polymer (A).

From the viewpoint of the antifouling properties, it is preferable that the structure (I) is included in at least the constitutional unit. In other words, it is preferable that the polymer (A) is a polymer having a constitutional unit (hereinafter, also referred to as a "constitutional unit (u1)") having the structure (I).

The constitutional unit (u1) may have the structure (I), and structures other than the structure (I) are not particularly limited. The structures other than the structure (I) can be appropriately selected from the constitutional units included in various known resins (polymers). Examples of such resins include a (meth)acrylic polymer, a vinyl-based polymer such as a styrene-based polymer, a novolac polymer, an acrylamide-based polymer, a polybutadiene-based polymer, and a cellulose-based polymer.

Specific examples of the constitutional unit (u1) include constitutional units represented by Formulae (u1-1) to (u1-3). Among these, from the viewpoints of the solubility of a polymer in a solvent and the durability of a coating film, a constitutional unit represented by Formula (u1-1) is preferable.

[Chem. 15]

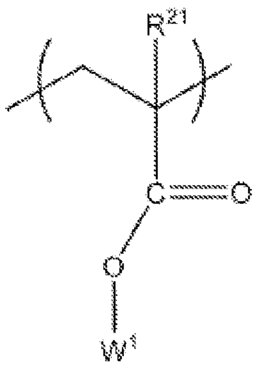

(u1-1)

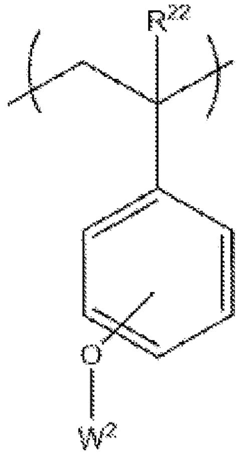

(u1-2)

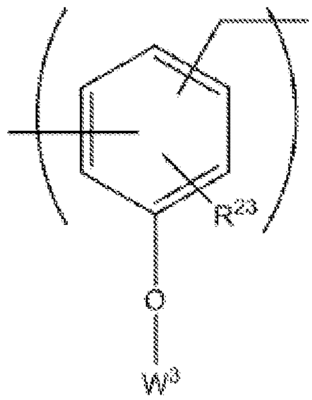

(u1-3)

In the formulae, $R^{21}$ to $R^{23}$ each independently represent a hydrogen atom or a methyl group, and $W^1$ to $W^3$ each independently represent the structure (I).

The constitutional unit (u1) is not particularly limited and may be a constitutional unit formed by polymerizing a monomer (m1) having the structure (I) or a constitutional unit formed by converting a constitutional unit containing a functional group such as an epoxy group or an isocyanate group in a polymer to the structure (I). A method of converting an epoxy group to the structure (I) will be described in detail in the section of a production method (β) below. Examples of a method of converting an isocyanate group to the structure (I) include a method of reacting a triamine compound such as a diethyleneamine or an alcohol having a diamine structure such as 2-(2-aminoethylamino)ethanol with a polymer containing an isocyanate group.

Examples of the monomer (m1) having the structure (I) include monomers obtained by reacting a diamine compound (for example, a compound (1) described below) with an epoxy group-containing vinyl monomer such as glycidyl (meth)acrylate, glycidyl α-ethyl acrylate, or 3,4-epoxybutyl (meth)acrylate.

The content of the constitutional unit (u1) in the polymer (A) is preferably 1% by mass or greater, more preferably 15% by mass or greater, and still more preferably 30% by mass or greater with respect to the total content (100% by mass) of all constitutional units. The upper limit thereof is not particularly limited and may be 100% by mass.

In a case where the content of the constitutional unit (u1) is greater than or equal to the above-described lower limit, the surface of a coating film to be formed is changed to be superhydrophilic in sea water or the like so that excellent antifouling properties can be exhibited.

The content (% by mass) of the constitutional unit (u1) in the polymer (A) can be measured according to a known method such as gas chromatography, high performance liquid chromatography, or nuclear magnetic resonance spectroscopy.

The polymer (A) may further have a constitutional unit (hereinafter, also referred to as a "constitutional unit (u2)") other than the constitutional unit (u1), in addition to the constitutional unit (u1).

The constitutional unit (u2) is not particularly limited as long as the constitutional unit does not have the structure (I) and can be appropriately selected from the constitutional units included in various known resins described above.

For example, in a case where the polymer (A) is a vinyl-based polymer such as a (meth)acrylic polymer, a constitutional unit derived from a monomer (m2) described below is exemplified as the constitutional unit (u2). The

constitutional unit derived from the monomer (m2) has a structure in which an ethylenically unsaturated bond (polymerizable carbon-carbon double bond) of the monomer (m2) is cleaved into a single bond.

Monomer (m2): a vinyl monomer which has an ethylenically unsaturated bond and does not have the structure (I)

Examples of the monomer (m2) are as follows.

Examples of the monomer (m2) include a hydrophobic group-containing (meth)acrylic acid ester monomer such as substituted or unsubstituted alkyl (meth)acrylate [for example, methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, behenyl (meth)acrylate, 1-methyl-2-methoxyethyl (meth)acrylate, 3-methoxybutyl (meth)acrylate, or 3-methyl-3-methoxybutyl (meth)acrylate], substituted or unsubstituted aralkyl (meth)acrylate [for example, benzyl (meth)acrylate, m-methoxyphenylmethyl (meth)acrylate, or p-methoxyphenylethyl (meth)acrylate], substituted or unsubstituted aryl (meth)acrylate [for example, phenyl (meth)acrylate, m-methoxyphenyl (meth)acrylate, p-methoxyphenyl (meth)acrylate, or o-methoxyphenylethyl (meth)acrylate], alicyclic (meth)acrylate [for example, isobornyl (meth)acrylate or cyclohexyl (meth)acrylate], trifluoroethyl (meth)acrylate, perfluorooctyl (meth)acrylate, or perfluorocyclohexyl (meth)acrylate; an oxyethylene group-containing (meth)acrylic acid ester monomer such as 2-methoxyethyl (meth)acrylate, 2-ethoxyethyl (meth)acrylate, 2-butoxyethyl (meth)acrylate, butoxydiethylene glycol (meth)acrylate, methoxytriethylene glycol (meth)acrylate, methoxypolyethylene glycol (meth)acrylate, phenoxyethyl (meth)acrylate, or 2-(2-ethylhexyloxy)ethyl (meth)acrylate; a hydroxyl group-containing (meth)acrylic acid ester monomer such as 2-hydroxyethyl (meth)acrylate, 2-hydroxypropyl (meth)acrylate, 4-hydroxybutyl (meth)acrylate, or glycerol (meth)acrylate; a terminal alkoxy allylated polyether monomer such as methoxypolyethylene glycol allyl ether, methoxypolypropylene glycol allyl ether, butoxypolyethylene glycol allyl ether, butoxypolypropylene glycol allyl ether, methoxypolyethylene glycol-polypropylene glycol allyl ether, or butoxypolyethylene glycol-polypropylene glycol allyl ether; an epoxy group-containing vinyl monomer such as glycidyl (meth)acrylate, glycidyl $\alpha$-ethyl acrylate, or 3,4-epoxybutyl (meth)acrylate; a primary or secondary amino group-containing vinyl monomer such as butyl aminoethyl (meth)acrylate or (meth)acrylamide; a tertiary amino group-containing vinyl monomer such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide, or dimethylaminopropyl (meth)acrylamide; a heterocyclic basic monomer such as vinylpyrrolidone, vinylpyridine, or vinyl carbazole; an organosilyl group-containing vinyl monomer such as trimethyl silyl (meth)acrylate, triethyl silyl (meth)acrylate, tri-n-propyl silyl (meth)acrylate, tri-n-butyl silyl (meth)acrylate, tri-n-amyl silyl (meth)acrylate, tri-n-hexyl silyl (meth)acrylate, tri-n-octyl silyl (meth)acrylate, tri-n-dodecyl silyl (meth)acrylate, triphenyl silyl (meth)acrylate, tri-p-methyl phenyl silyl (meth)acrylate, tribenzyl silyl (meth)acrylate, triisopropyl silyl (meth)acrylate, triisobutyl silyl (meth)acrylate, tri-s-butyl silyl (meth)acrylate, tri-2-methylisopropylsilyl (meth)acrylate, tri-t-butyl silyl (meth)acrylate, ethyl dimethyl silyl (meth)acrylate, n-butyl dimethyl silyl (meth)acrylate, diisopropyl-n-butyl silyl (meth)acrylate, n-octyl di-n-butyl silyl (meth)acrylate, diisopropyl stearyl silyl (meth)acrylate, dicyclohexyl phenyl silyl (meth)acrylate, t-butyl diphenyl silyl (meth)acrylate, lauryl diphenyl silyl (meth)acrylate, triisopropyl silyl methyl maleate, triisopropyl silyl amyl maleate, tri-n-butylsilyl-n-butyl maleate, t-butyl diphenyl silyl methyl maleate, t-butyl diphenyl silyl-n-butyl maleate, triisopropyl silyl methyl maleate, triisopropyl silyl amyl fumarate, tri-n-butylsilyl-n-butyl fumarate, t-butyl diphenyl silyl methyl fumarate, or t-butyl diphenylsilyl-n-butyl fumarate; an acid anhydride group-containing vinyl monomer such as maleic anhydride or itaconic anhydride; a carboxy group-containing ethylenically unsaturated monomer such as methacrylic acid, acrylic acid, crotonic acid, vinylbenzoic acid, fumaric acid, itaconic acid, maleic acid, citraconic acid, monomethyl maleate, monoethyl maleate, monobutyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, monoethyl citraconate, tetrahydrophthalic acid monohydroxyethyl (meth)acrylate, tetrahydrophthalic acid monohydroxypropyl (meth)acrylate, tetrahydrophthalic acid monohydroxybutyl (meth)acrylate, phthalic acid monohydroxyethyl (meth)acrylate, phthalic acid monohydroxypropyl (meth)acrylate, succinic acid monohydroxyethyl (meth)acrylate, succinic acid monohydroxypropyl (meth)acrylate, maleic acid monohydroxyethyl (meth)acrylate, or maleic acid monohydroxypropyl (meth)acrylate; an unsaturated dicarboxylic acid diester monomer such as dimethyl maleate, dibutyl maleate, dimethyl fumarate, dibutyl fumarate, dibutyl itaconate, or diperfluorocyclohexyl fumarate; a cyano group-containing vinyl monomer such as acrylonitrile or methacrylonitrile; a vinyl ether monomer such as alkyl vinyl ether [for example, ethyl vinyl ether, propyl vinyl ether, butyl vinyl ether, hexyl vinyl ether, or 2-ethyl hexyl vinyl ether], or cycloalkyl vinyl ether [such as cyclohexyl vinyl ether]; a vinyl ester monomer such as vinyl acetate, vinyl propionate, vinyl butyrate, or vinyl benzoate; an aromatic vinyl monomer such as styrene, vinyl toluene, or $\alpha$-methyl styrene; a halogenated olefin such as vinyl chloride, vinylidene chloride, vinyl fluoride, vinylidene fluoride, or chlorotrifluoroethylene; a polyfunctional monomer such as ethylene glycol di(meth)acrylate, diethylene glycol di(meth)acrylate, triethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl methacrylate, triallyl cyanurate, diallyl maleate, or polypropylene glycol diallyl ether; a macromonomer; (meth)acrylate containing at least one selected from the group consisting of a 1-(alkyloxy) ester group, a

1-(alkylthio) ester group, and a 1-(dialkylamino) ester group; a divalent metal-containing vinyl monomer; and a polysiloxane skeleton-containing vinyl monomer such as FM-0711, FM-0721, and FM-0725 (all trade names, manufactured by JNC Corporation), X-24-8201, X-22-174ASX, X-22-174DX, and X-22-2426 (all trade names, manufactured by Shin-Etsu Chemical Co., Ltd.), TM-0701 (trade name, manufactured by JNC Corporation), or X-22-2404 (trade name, manufactured by Shin-Etsu Chemical Co., Ltd.).

The monomer can be used by appropriately selecting one or two or more from these as necessary.

As the macromonomer, a compound which contains an ethylenically unsaturated bond-containing group and has two or more constitutional units derived from a monomer containing an ethylenically unsaturated bond-containing group is exemplified. Two or more constitutional units included in the macromonomer may be the same as or different from one another.

Examples of the ethylenically unsaturated bond-containing group include CH2=C(COOR)-CH2-, a (meth)acryloyl group, a 2-(hydroxymethyl)acryloyl group, and a vinyl group. Here, R represents a hydrogen atom, an unsubstituted or substituted alkyl group, an unsubstituted or substituted alicyclic group, an unsubstituted or substituted aryl group, or an unsubstituted or substituted heterocyclic group. As the substituent, at least one selected from the group consisting of an alkyl group (here, a case where R represents an alkyl group having a substituent is excluded), an aryl group, $-COOR^{61}$, a cyano group, $-OR^{62}$, $-NR^{63}R^{64}$, $-CONR^{65}R^{66}$, a halogen atom, an allyl group, an epoxy group, a siloxy group, and a hydrophilic or ionic group is exemplified. Here, $R^{61}$ to $R^{66}$ each independently represent a hydrogen atom, an alkyl group, an alicyclic group, or an aryl group.

As the monomer containing an ethylenically unsaturated bond-containing group, for example, various monomers described above as examples of the monomer (m2) can be used (here, a macromonomer is excluded).

Specific examples of the macromonomer include monomers disclosed in international publication WO 2013/108880 A.

Examples of the (meth)acrylate containing at least one selected from the group consisting of a 1-(alkyloxy) ester group, a 1-(alkylthio) ester group, and a 1-(dialkylamino) ester group include the monomers disclosed in international publication WO 2016/167360 A.

Examples of the divalent metal-containing vinyl monomer include zinc acrylate $[(CH_2=CHCOO)_2Zn]$, zinc methacrylate $[(CH_2=C(CH_3)COO)_2Zn]$, copper acrylate $[(CH_2=CHCOO)_2Cu]$, copper methacrylate $[(CH_2=C(CH_3)COO)_2Cu]$, magnesium acrylate $[(CH_2=CHCOO)_2Mg]$, magnesium methacrylate $[(CH_2=C(CH_3)COO)_2Mg]$, calcium acrylate $[(CH_2=CHCOO)_2Ca]$, and calcium methacrylate $[(CH2=C(CH_3)COO)2Ca]$. Examples thereof include magnesium monochloroacetate (meth)acrylate, calcium monochloroacetate (meth)acrylate, zinc monochloroacetate (meth)acrylate, and copper monochloroacetate (meth)acrylate; magnesium monofluoroacetate (meth)acrylate, calcium monofluoroacetate (meth)acrylate, zinc monofluoroacetate (meth)acrylate, and copper monofluoroacetate (meth)acrylate; magnesium acetate (meth)acrylate, calcium acetate (meth)acrylate, zinc acetate (meth)acrylate, and copper acetate (meth)acrylate; magnesium propionate (meth)acrylate, calcium propionate (meth)acrylate, zinc propionate (meth)acrylate, and copper propionate (meth)acrylate; magnesium octylate (meth)acrylate, calcium octylate (meth)acrylate, zinc octylate (meth)acrylate, and copper octylate (meth)acrylate; magnesium versatate (meth)acrylate, calcium versatate (meth)acrylate, zinc versatate (meth)acrylate, and copper versatate (meth)acrylate; magnesium isostearate (meth)acrylate, calcium isostearate (meth)acrylate, zinc isostearate (meth)acrylate, and copper isostearate (meth)acrylate; magnesium palmitate (meth)acrylate, calcium palmitate (meth)acrylate, zinc palmitate (meth)acrylate, and copper palmitate (meth)acrylate; magnesium cresotinate (meth)acrylate, calcium cresotinate (meth)acrylate, zinc cresotinate (meth)acrylate, and copper cresotinate (meth)acrylate; magnesium $\alpha$-naphthoate (meth)acrylate, calcium $\alpha$-naphthoate (meth)acrylate, zinc $\alpha$-naphthoate (meth)acrylate, and copper $\alpha$-naphthoate (meth)acrylate; magnesium $\beta$-naphthoate (meth)acrylate, calcium $\beta$-naphthoate (meth)acrylate, zinc $\beta$-naphthoate (meth)acrylate, and copper $\beta$-naphthoate (meth)acrylate; magnesium benzoate (meth)acrylate, calcium benzoate (meth)acrylate, zinc benzoate (meth)acrylate, and copper benzoate (meth)acrylate; magnesium 2,4,5-trichlorophenoxy acetate (meth)acrylate, calcium 2,4,5-trichlorophenoxy acetate (meth)acrylate, zinc 2,4,5-trichlorophenoxy acetate (meth)acrylate, and copper 2,4,5-trichlorophenoxy acetate (meth)acrylate; magnesium 2,4-dichlorophenoxy acetate (meth)acrylate, calcium 2,4-dichlorophenoxy acetate (meth)acrylate, zinc 2,4-dichlorophenoxy acetate (meth)acrylate, and copper 2,4-dichlorophenoxy acetate (meth)acrylate; magnesium quinoline carboxylate (meth)acrylate, calcium quinoline carboxylate (meth)acrylate, zinc quinoline carboxylate (meth)acrylate, and copper quinoline carboxylate (meth)acrylate; magnesium nitrobenzoate (meth)acrylate, calcium nitrobenzoate (meth)acrylate, zinc nitrobenzoate (meth)acrylate, and copper nitrobenzoate (meth)acrylate; magnesium nitronaphthalene carboxylate (meth)acrylate, calcium nitronaphthalene carboxylate (meth)acrylate, zinc nitronaphthalene carboxylate (meth)acrylate, and copper nitronaphthalene carboxylate (meth)acrylate; and magnesium pyruvate (meth)acrylate, calcium pyruvate (meth)acrylate, zinc pyruvate (meth)acrylate, and copper pyruvate (meth)acrylate.

As the polymer (A), a (meth)acrylic polymer or a novolac polymer is preferable from the viewpoint of the durability of the coating film and a (meth)acrylic polymer is particularly preferable from the viewpoint of the solubility of the polymer in a solvent.

In a case where a (meth)acrylic polymer is used as the polymer (A), at least a part of constitutional units included

in the polymer (A) are constitutional units derived from a (meth)acrylic monomer. The proportion of the constitutional units derived from a (meth)acrylic monomer is preferably in a range of 20% to 100% by mass and more preferably in a range of 40% to 100% by mass with respect to the total amount (100% by mass) of all constitutional units in the polymer (A).

In a case where the polymer (A) has the constitutional unit (u1), it is preferable that the constitutional unit (u1) has a constitutional unit derived from a (meth)acrylic monomer (for example, a constitutional unit represented by Formula (u1-1)).

In a case where the polymer (A) has the constitutional unit (u1) and the constitutional unit (u2), any one of the constitutional unit (u1) and the constitutional unit (u2) may have a constitutional unit derived from a (meth)acrylic monomer, or both of these may have a constitutional unit derived from a (meth)acrylic monomer.

Examples of the polymer (A) which is a novolac polymer include a polymer having a constitutional unit represented by Formula (u1-3).

The number average molecular weight (Mn) of the polymer (A) is preferably in a range of 1,000 to 500,000 and more preferably in a range of 2,000 to 200,000. The weight-average molecular weight (Mw) of the polymer (A) is preferably in a range of 2,000 to 1,500,000 and more preferably in a range of 3,000 to 300,000. In a case where the Mn or Mw of the polymer (A) is less than or equal to the above-described upper limit, the solubility of the polymer in a solvent is further excellent. In a case where the Mn or Mw is greater than or equal to the above-described lower limit, the durability of the coating film is further excellent.

The dispersity (Mw/Mn) of the polymer (A) is preferably in a range of 1.1 to 99.9 and more preferably in a range of 1.5 to 9.9.

The Mn and Mw of the polymer (A) are each a value in terms of standard polystyrene, which is measured by gel permeation chromatography (GPC).

(Method of producing polymer (A))

Examples of a method of producing the polymer (A) include the following production methods (α) and (β). Here, the method of producing the polymer (A) is not limited to these.

Production method (α): a method of polymerizing a monomer mixture containing the following monomer (m1)

Monomer (m1): a monomer having the structure (1)

Production method (β): a method of reacting an epoxy group of the following polymer (A0) with the following compound (1)

Polymer (A0): a polymer containing an epoxy group

Compound (1): a compound which is capable of reacting with an epoxy group

"Production method (α)"

Examples of the monomer (m1) are the same as those described above.

The monomer mixture may contain monomers other than the monomer (m1). As other monomers, monomers which do not have the structure (I) and are copolymerizable with the monomer (m1) may be employed. For example, in a case where the monomer (m1) is a monomer having an ethylenically unsaturated bond, typically, other monomers are also monomers having an ethylenically unsaturated bond. Examples of other monomers having an ethylenically unsaturated bond include the monomer (m2).

The preferable range of the content (% by mass) (charge amount) of the monomers constituting the monomer mixture is the same as the preferable range of the corresponding content of the monomer. For example, the content of the monomer (m1) is preferably 1% by mass or greater, more preferably 15% by mass or greater, and still more preferably 30% by mass with respect to the total mass (100% by mass) of the monomer mixture.

The monomer (m1) and the monomer (m2) used can be each commercially available product or appropriately synthesized using a known method.

As a method of polymerizing the monomer mixture, for example, a known polymerization method such as a solution polymerization method, a suspension polymerization method, a bulk polymerization method, or an emulsion polymerization method can be employed. From the viewpoints of the productivity and the performance of the coating film, a solution polymerization method is preferable.

The polymerization may be performed using a known method. Examples of the known method include a method of allowing the monomer mixture to react at a reaction temperature of 60°C to 120°C for 4 to 14 hours in the presence of a radical polymerization initiator. During the polymerization, a chain transfer agent may be used as necessary.

As the radical polymerization initiator, a known initiator can be used, and examples thereof include 2,2-azobis(isobutyronitrile), 2,2-azobis(2,4-dimethyl valeronitrile), 2,2-azobis(2-methylbutyronitrile), benzoyl peroxide, cumene hydroperoxide, lauryl peroxide, di-t-butyl peroxide, and t-butylperoxy-2-ethylhexanoate.

The content of the radical polymerization initiator is not particularly limited and can be appropriately set. The

content thereof is typically in a range of 0.1 to 20 parts by mass with respect to 100 parts by mass of the monomer mixture.

As the chain transfer agent, a known agent can be used, and examples thereof include mercaptans such as n-dodecyl mercaptan, thioglycolic acid esters such as octyl thioglycolate, an α-methylstyrene dimer, and terpinolene.

The content of the chain transfer agent is not particularly limited and can be appropriately set. The content thereof is typically in a range of 0.0001 to 10 parts by mass with respect to 100 parts by mass of the polymerizable monomer.

As the solvent used for the solution polymerization, for example, a typical organic solvent such as toluene, xylene, methyl isobutyl ketone, or n-butyl acetate can be used.

"Production method (β)"

As the polymer (A0), various known epoxy resins can be used, and examples thereof include a homopolymer or a copolymer of an epoxy group-containing vinyl monomer, and a novolac type epoxy resin (for example, poly[(o-cresyl glycidyl ether)-co-formaldehyde]). Examples of the epoxy group-containing vinyl monomer are the same as those described in the section of the monomer (m2).

Examples of the compound (1) include compounds represented by Formula (1-1) and/or Formula (1-2) and/or Formula (1-3).

[Chem. 16]

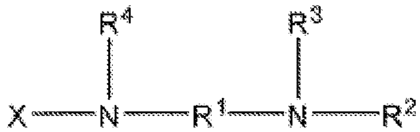

(1-1)

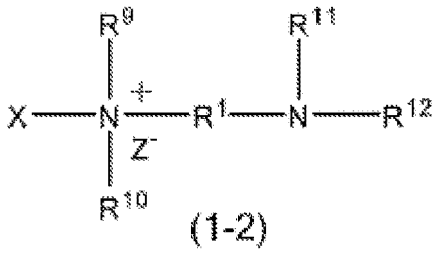

(1-2)

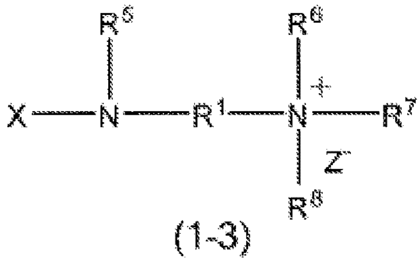

(1-3)

In the formulae, $R^1$ to $R^{12}$ each have the same definition as described above, and X represents a hydrogen atom or an organic group containing a functional group which can react with an epoxy group.

Examples of the functional group which can react with an epoxy group include a primary amino group, a secondary amino group, a primary alkylene alcohol group, a secondary alkylene alcohol group, a primary alkylene thiol group, and a secondary alkylene thiol group.

In a case where X represents an organic group containing a primary amino group or a secondary amino group, the primary amino group or secondary amino group in the organic group may be in a salt state.

Specific examples of the compound (1) include N,N-diethylethylenediamine, N-(tert-butoxycarbonyl)-N'-methylethylenediamine, and aminoethyl pyridinium bromide-hydrobromide.

The polymer (A0) and the compound (1) used can be each commercially available product or appropriately synthesized using a known method.

For example, a homopolymer or copolymer of the epoxy group-containing vinyl monomer can be obtained by polymerizing the monomer mixture containing an epoxy group-containing vinyl monomer. The monomer mixture may further contain a monomer other than the epoxy group-containing vinyl monomer. The polymerization of the monomer mixture can be performed in the same manner as in the production method ($\alpha$).

The reaction between the compound (1) and the epoxy group of the polymer (A0) (addition reaction) can be carried out according to a method of the related art. The reaction can be carried out under conditions of 70°C for 1 to 3 hours after addition of a catalyst such as trimethylamine.

As described above, the epoxy group of the polymer (A0) is converted to a group having the structure (I) by carrying out a reaction between the compound (1) and the epoxy group of the polymer (A0). For example, a compound in which X in Formula (1-1) represents a hydrogen atom is used as the compound (1), the epoxy group becomes $-CH(OH)-CH2-NR^4-R^1-NR^2R^3$. In this manner, the polymer (A) is obtained.

(Effects)

Since the polymer (A) has the structure (I), a coating film having both of antifouling properties resulting from the superhydrophilicity and water resistance can be formed.

In a case where $CO_2$ reacts with the surface of the coating film that contains the polymer (A) in the presence of water, a reaction for forming a cationic structure and a zwitterionic structure as a structure for stabilizing a carbamate so that the structure (I) is formed occurs in the surface of the coating film.

For example, in a case of the structure represented by Formula (1-1) and the zwitterionization, as shown in the following schemes 1 and 2, any of $R^2$ to $R^4$ bonded to one nitrogen atom between two nitrogen atoms in the structure (I) is substituted with $COO^-$, and a hydrogen atom is bonded to the other nitrogen atom and cationized so that a zwitterionic structure is obtained. In a case of dicationization, as shown in the following scheme 3, a hydrogen atom is bonded to each of the two nitrogen atoms in the structure (I) and cationized so that a dicationic structure is obtained.

In the structures represented by Formulae (1-2) and (1-3), a zwitterionic structure is obtained in a case where $R^5$ and $R^{11}$ are substituted with $COO^-$. A cationic structure is obtained in a case where a hydrogen atom is bonded to each of the nitrogen atoms to which $R^5$ and $R^{11}$ are bonded.

In a case where a zwitterionic structure is formed, the hydrophilicity of the surface of the coating film is increased, the surface tension is decreased, and the wettability is increased. Further, in the case where a zwitterionic structure is formed, the higher hydrophilicity is exhibited compared to a case where only a dicationic structure is formed. For example, the superhydrophilicity in which a contact angle with air in water is 160° or greater can be exhibited.

[Chem. 17]

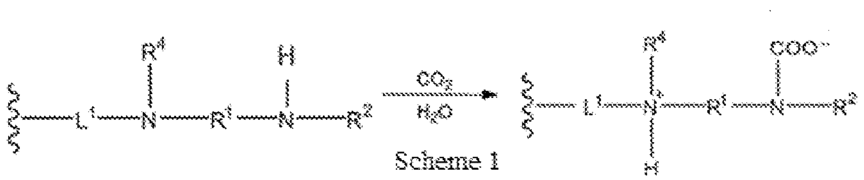


Scheme 1

[Chem. 18]

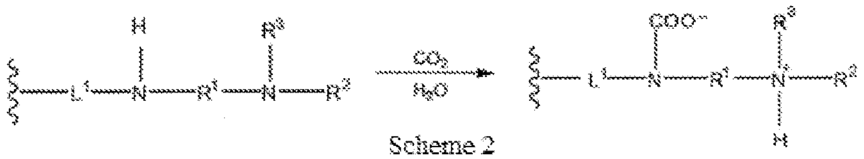


Scheme 2

[Chem. 19]

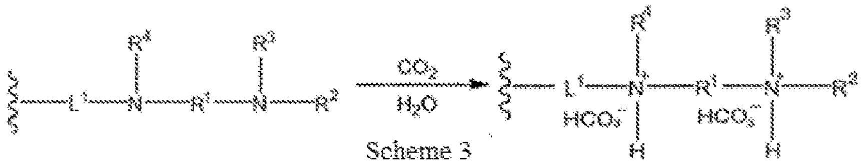


Scheme 3

Typically, $CO_2$ is dissolved in water or sea water. Accordingly, in the surface of the coating film containing the polymer (A) in water or sea water, the structure (1) is changed to a structure for stabilizing a carbamate to be formed and the superhydrophilicity is exhibited as described above. Therefore, marine organisms and the like are unlikely to adhere to the surface of the coating film in this state, and an excellent antifouling effect is exhibited even in a case where the coating film does not contain an antifouling agent.

Further, in the portion other than the surface of the coating film, since the structure (I) is not changed, the hydrophilicity of the portion is lower than that of the surface and the portion is unlikely to be affected by water. The water resistance of the coating film can be sufficiently ensured by this portion. For example, the coating film is unlikely to collapse or be peeled off in sea water. Therefore, the excellent antifouling effect is exhibited for a long period of time.

For example, even in a case where the zwitterionic structure is removed in sea water, the structure (I) exposed to the surface of the coating film due to this removal reacts with $CO_2$ in the presence of water and then is changed to a zwitterionic structure so that the superhydrophilicity is exhibited again. Consequently, the hydrophilicity is recovered even in a case where the surface of the coating film collapses or is peeled off.

A coating film of a resin composition or an antifouling coating material composition that contains the polymer (A) also exhibits the same effect as described above.

Therefore, the polymer (A) is suitable as an antifouling coating material composition. However, the applications of the polymer (A) are not limited thereto, and the polymer (A) can also be used for, for example, an antifogging coating material composition other than the antifouling coating material composition.

[Resin composition]

A resin composition of the present invention contains the polymer (A).

The polymer (A) contained in the resin composition of the present invention may be used alone or in combination of two or more kinds thereof.

The content of the polymer (A) in the resin composition of the present invention is not particularly limited, but is preferably 3% by mass or greater, more preferably 10% by mass or greater, and particularly preferably 20% by mass or greater with respect to the total amount of the resin composition from which solvents are excluded. In a case where the content of the polymer (A) is greater than or equal to the above-described lower limit, an antifouling coating material composition having a sufficiently high hydrophilicity can be easily obtained.

The upper limit of the content of the polymer (A) is not particularly limited and may be 100% by mass.

The resin composition of the present invention may contain an organic solvent. In a case where the resin composition contains an organic solvent, the coating suitability of the antifouling coating material composition contained in this resin composition, the water resistance of a coating film to be formed, and the film forming properties are further improved.

The organic solvent is not particularly limited, and examples thereof include an aromatic solvent such as anisole, toluene, or xylene; an ether-based solvent such as propylene glycol monomethyl ether-2-acetate; a ketone-based solvent such as methyl isobutyl ketone; and an ester-based solvent such as n-butyl acetate. These can be used alone or in combination of two or more kinds thereof.

From the viewpoint of reducing the VOC content in the antifouling coating material composition, the content of the organic solvent in the resin composition of the present invention is preferably 90% by mass or less and more preferably 80% by mass or less with respect to the total amount of the resin composition.

The content of the organic solvent is preferably set to an amount such that the viscosity of the resin composition to be measured at 25°C using a B type viscometer is less than or equal to the preferable upper limit described below and varies depending on the weight-average molecular weight of the polymer (A), the glass transition temperature thereof, the presence of a crosslinked structure, and the like, but is preferably 20% by mass or greater and more preferably 30% by mass or greater.

The resin composition of the present invention may further contain components other than the polymer (A) and the organic solvent. Examples of other components include those exemplified as other components in the antifouling coating material composition described below.

The content of other components is preferably 20 parts by mass or less and may be 0 parts by mass with respect to 100 parts by mass of the polymer (A).

In a case where the resin composition of the present invention is a liquid composition containing an organic solvent, the viscosity of the resin composition to be measured at 25°C using a B type viscometer (hereinafter, also referred to as a "B type viscosity") is preferably 4000 mPa·s or less and more preferably 2000 mPa·s or less. In a case where the B type viscosity of the resin composition is less than or equal to the above-described upper limit, a solvent does not need to be added to the resin composition in order to dilute the resin composition, and an antifouling agent or the like can be blended or applied thereto so that an antifouling coating material composition with a small VOC content can be obtained.

The lower limit of the B type viscosity is not particularly limited. From the viewpoint of suppressing sagging of the coating material at the time of application, the B type viscosity is preferably 100 mPa·s or greater.

The resin composition of the present invention can be produced using a known method. For example, a resin composition can be prepared by producing the polymer (A) according to the production method ($\alpha$) or ($\beta$) described above and blending an organic solvent, other components, and the like with the obtained polymer (A) as necessary.

The resin composition of the present invention can be formed into an antifouling coating material composition as it is or by being mixed with an antifouling agent and the like as necessary.

[Antifouling coating material composition]

The antifouling coating material composition of the present invention contains the resin composition. Therefore, the antifouling coating material composition of the present invention contains the polymer (A).

The antifouling coating material composition of the present invention may further contain an antifouling agent.

The antifouling coating material composition of the present invention may further contain an organic solvent. Examples of the organic solvent are the same as those described above.

The antifouling coating material composition of the present invention may further contain other components than the polymer (A), the antifouling agent, and the organic solvent.

In a case where the antifouling coating material composition contains an organic solvent, other components, and the like, these components may be derived from the resin composition, may not be derived from the resin composition (those which are blended at the time of preparation of the antifouling coating material composition), or may be a mixture of these.

(Antifouling agent)

Examples of the antifouling agent include inorganic antifouling agents and organic antifouling agents, and one or two or more kinds can be appropriately selected depending on the required performance and used.

Examples of the antifouling agent include a copper-based antifouling agent such as cuprous oxide, copper thiocyanate, or copper powder, compounds of other metals (lead, zinc, nickel, and the like), an amine derivative such as diphenylamine, a nitrile compound, a benzothiazole-based compound, a maleimide-based compound, and a pyridine-based compound. These may be used alone or in combination of two or more kinds thereof.

More specific examples of the antifouling agent include 4-bromo-2-(4-chlorophenyl)-5-(trifluoromethyl)-1H-pyrrole-3-carbonitrile, manganese ethylene bisdithiocarbamate, zinc dimethyl dithiocarbamate, 2-methylthio-4-t-butylamino-6-cyclopropylamino-s-triazine, 2,4,5,6-tetrachloroisophthalonitrile, N,N-dimethyldichlorophenylurea, zinc ethylene bisdithiocarbamate, copper rhodanide, 4,5-dichloro-2-n-octyl-4-isothiazolin-3-one, N-(fluorodichloromethylthio)phthalimide, N,N'-dimethyl-N'-phenyl-(N-fluorodichloromethylthio)sulfamide, 2-pyridinethiol-1-oxide zinc salt (also referred to as "zinc pyrithione"), tetramethylthiuram disulfide, a Cu-10% Ni solid solution alloy, 2,4,6-trichlorophenylmaleimide, 2,3,5,6-tetrachloro-4-(methylsulfonyl)pyridine, 3-iodo-2-propynyl butyl carbamate, diiodomethyl p-tolyl sulfone, bisdimethyldithiocarbamoyl zinc ethylene bisdithiocarbamate, phenyl(bispyridyl)bismuth dichloride, 2-(4-thiazolyl)-benzoimidazole, medetomidine, and pyridine triphenyl borane.

Among these, from the viewpoint of the antifouling properties, it is preferable that the antifouling agent contains at least one selected from the group consisting of cuprous oxide, pyridine triphenyl borane, 4,5-dichloro-2-n-octyl-4-isothiazolin-3-one, 4-bromo-2-(4-chlorphenyl)-5-(trifluoromethyl)-1H-pyrrole-3-carbonitrile (hereinafter, also referred to as an "antifouling agent (1)"), and medetomidine.

In a case where cuprous oxide and the antifouling agent (1) are used in combination, the blending ratio (mass ratio) between the cuprous oxide and the antifouling agent (1) (cuprous oxide/antifouling agent (1)) is preferably in a range of 80/20 to 99/1 and more preferably in a range of 90/10 to 99/1.

Other antifouling agents may be combined with at least one selected from the group consisting of cuprous oxide, pyridine triphenyl borane, 4,5-dichloro-2-n-octyl-4-isothiazolin-3-one, the antifouling agent (1), and medetomidine.

In a case where the antifouling coating material composition contains an antifouling agent, the content of the

antifouling agent in the antifouling coating material composition is not particularly limited, but is preferably in a range of 10 to 200 parts by mass and more preferably in a range of 50 to 150 parts by mass with respect to 100 parts by mass of the polymer (A). In a case where the content of the antifouling agent is greater than or equal to the above-described lower limit, the antifouling effect of a coating film to be formed is excellent. In a case where the content of the antifouling agent is less than or equal to the upper limit of the above-described upper limit, the physical properties of the coating film are excellent.

(Other components)

As other components, polymers other than the polymer (A) may be exemplified. Other polymers are polymers that do not have the structure (I). Examples of other polymers include thermoplastic resins (thermoplastic polymers) other than the polymer (A).

It is preferable that the antifouling coating material composition of the present invention contains a thermoplastic resin other than the polymer (A). In a case where the antifouling coating material composition contains a thermoplastic resin other than the polymer (A), the physical properties of the coating film such as crack resistance and water resistance are improved.

Examples of the thermoplastic resin other than the polymer (A) include chlorinated paraffin; chlorinated polyolefin such as chlorinated rubber, chlorinated polyethylene, or chlorinated polypropylene; polyvinyl ether; polypropylene sebacate; partially hydrogenated terphenyl; polyvinyl acetate; poly(meth)acrylic acid alkyl ester such as a methyl (meth)acrylate-based copolymer, an ethyl (meth)acrylate-based copolymer, a propyl (meth)acrylate-based copolymer, a butyl (meth)acrylate-based copolymer, or a cyclohexyl (meth)acrylate-based copolymer; a polyether polyol; an alkyd resin; a polyester resin; a vinyl chloride-based resin such as a vinyl chloride-vinyl acetate copolymer, a vinyl chloride-vinyl propionate copolymer, a vinyl chloride-isobutyl vinyl ether copolymer, a vinyl chloride-isopropyl vinyl ether copolymer, or a vinyl chloride-ethyl vinyl ether copolymer; waxes; fats and oils in a solid state at room temperature other than waxes; fats and oils in a liquid state at room temperature such as caster oil and refined products thereof; petroleum jelly; liquid paraffin; and rosin, hydrogenated rosin, naphthenic acid, fatty acids, and divalent metal salts of these. Examples of the waxes include waxes derived from animals such as beeswax; waxes derived from plants; semi-synthetic waxes such as amide-based waxes; and synthetic waxes such as polyethylene oxide-based waxes. These thermoplastic resins may be used alone or in combination of two or more kinds thereof.

From the viewpoints of functioning as a plasticizer and obtaining an effect of improving the crack resistance or the peeling resistance of the coating film, chlorinated paraffin is preferable.

From the viewpoints of functioning as an antisettling agent or an antisagging agent and obtaining an effect of improving the storage stability or the pigment dispersibility of the antifouling coating material composition, organic waxes such as semi-synthetic waxes and synthetic waxes are preferable, and polyethylene waxes, polyethylene oxide waxes, and polyamide waxes are more preferable.

The content of the thermoplastic resin other than the polymer (A) in the antifouling coating material composition is not particularly limited, but is preferably in a range of 0.1 to 50 parts by mass and more preferably in a range of 0.1 to 10 parts by mass with respect to 100 parts by mass of the polymer (A). In a case where the content of the thermoplastic resin other than the polymer (A) is greater than or equal to the above-described lower limit, the physical properties of the coating film such as crack resistance or water resistance are excellent. In a case where the content thereof is less than or equal to the above-described upper limit, the hydrophilicity is excellent.

For the purpose of imparting lubricity to the surface of the coating film and preventing adhesion of organisms, the antifouling coating material composition of the present invention may contain a silicon compound such as dimethylpolysiloxane, a fluorine-containing compound such as fluorinated hydrocarbon, or the like.

It is preferable that the antifouling coating material composition of the present invention may further contain a silicone oil. In a case where the antifouling coating material composition contains a silicone oil, the antifouling properties of a coating film to be formed are excellent.

Examples of the silicone oil include a straight silicone oil such as dimethyl silicone oil, methyl phenyl silicone oil, or methyl hydrogen silicone oil, and a modified silicone oil. A modified silicone oil indicates a silicone oil in which an organic group other than a methyl group and a phenyl group (hereinafter, also referred to as a "modification group") is introduced into some silicon atoms of a straight silicone oil. Examples of the modification group include a chlorophenyl group, a methylstyrene group, a long-chain alkyl group (for example, an alkyl group having 2 to 18 carbon atoms), a polyether group, a carbinol group, an aminoalkyl group, an epoxy group, and a (meth)acryloyl group. These silicone oils may be used alone or in combination of two or more kinds thereof. Among the examples described above, from the viewpoint of the antifouling properties, polyether-modified silicone oil containing a polyether group as a modification group is preferable as the silicone oil.

As the silicone oil, commercially available products can be used. Examples of the commercially available products include "KF-96", "KF-50", "KF-54", "KF-56", and "KF-6016" (all manufactured by Shin-Etsu Chemical Co., Ltd.),

"TSF451" (manufactured by Momentive Performance Materials Inc.), "Fluid47" (manufactured by (France) Rhone-Poulenc), and "SH200", "SH510", "SH550", "SH710", "DC200", "ST-114PA", and "FZ209" (all manufactured by Dow Corning Toray Co., Ltd.).

In a case where the antifouling coating material composition contains silicone oil, the content of the silicone oil in the antifouling coating material composition is preferably in a range of 1 % to 10% by mass and more preferably in a range of 1 % to 5% by mass with respect to the total mass of the antifouling coating material composition. In a case where the content of the silicone oil is greater than or equal to the above-described lower limit, the antifouling properties are excellent. In a case where the content of the silicone oil is less than or equal to the above-described upper limit, the recoatability is excellent.

The antifouling coating material composition of the present invention may further contain a crosslinking agent. In a case where the antifouling coating material composition contains a crosslinking agent, the coating film is cured so that the water resistance, the hardness, and the like of the coating film can be improved.

In the case where the antifouling coating material composition contains a crosslinking agent, the composition may further contain a catalyst in order to increase the crosslinking reactivity.

As the crosslinking agent, a compound having two or more functional groups that react with an amino group of the structure (I) is exemplified. Examples of such functional groups include an epoxy group, an amino group, a mercapto group, an acrylic group, a carboxyl group, and an acid anhydride group. Specific examples of the crosslinking agent include a bisphenol A glycidyl ether oligomer, diethylenetriamine, trimethylolpropane tris(3-mercaptobutyrate), trimethylolpropane triacrylate, and pyromellitic anhydride.

Examples of the catalyst include 2,4,6-tris(dimethylaminomethyl)phenol, diazabicycloundecene, 2-ethyl-4-methylimidazole, and triphenyl phosphine.

The antifouling coating material composition of the present invention may contain various pigments, crosslinking agents, dehydrating agents, antifoaming agents, leveling agents, pigment dispersants (such as antisettling agents), antisagging agents, matting agents, ultraviolet absorbing agents, antioxidants, heat resistance improvers, slipping agents, preservatives, plasticizers, and viscosity control agents. These additives may be used alone or in combination of two or more kinds thereof.

Examples of the pigments include zinc oxide, talc, silica, barium sulfate, potassium feldspar, aluminum hydroxide, magnesium carbonate, mica, carbon black, red iron oxide, titanium oxide, phthalocyanine blue, kaolin, and gypsum. Among these, zinc oxide and talc are particularly preferable.

Examples of the dehydrating agents include a silicate-based dehydrating agent, an isocyanate-based dehydrating agent, an ortho ester-based dehydrating agent, and an inorganic dehydrating agent. More specific examples thereof include methyl orthoformate, ethyl orthoformate, methyl orthoacetate, orthoboric acid ester, tetraethyl orthosilicate, anhydrous gypsum, calcined gypsum, and synthetic zeolite (molecular sieve). Among these, a molecular sieve is particularly preferable.

Examples of the antisettling agent and the antisagging agent other than the thermoplastic resin include a bentonite-based agent, a fine powder silica-based agent, a stearate salt, a lecithin salt, and an alkyl sulfonate.

Examples of the plasticizer other than the thermoplastic resin include a phthalic acid ester-based plasticizer such as dioctyl phthalate, dimethyl phthalate, dicyclohexyl phthalate, or diisodecyl phthalate; an aliphatic dibasic acid ester-based plasticizer such as isobutyl adipate or dibutyl sebacate; a glycol ester-based plasticizer such as diethylene glycol dibenzoate or pentaerythritol alkyl ester; a phosphoric acid ester-based plasticizer such as tricresyl phosphate (TCP), triaryl phosphate, or trichloroethyl phosphate; an epoxy-based plasticizer such as epoxy soybean oil or octyl epoxy stearate; an organic tin plasticizer such as dioctyl tin laurate or dibutyl tin laurate; and trioctyl trimellitate, and triacetylene. In a case where the antifouling coating material composition contains a plasticizer, the crack resistance and the peeling resistance of the coating film can be improved. Among the examples described above, TCP is preferable as the plasticizer.

The solid content of the antifouling coating material composition of the present invention is preferably in a range of 10% to 100% by mass and more preferably in a range of 30% to 80% by mass. In a case where the solid content of the antifouling coating material composition is greater than or equal to the above-described lower limit, the VOC content is sufficiently decreased.

The solid content (heating residue) is measured by the following measuring method.

0.50 g of a measurement sample (antifouling coating material composition) is measured using an aluminum dish, 3 mL of toluene is added thereto using a syringe so that the sample is evenly spread over on the bottom of the dish, and preliminary drying is performed. The preliminary drying is a treatment for easily evaporating a solvent during the main drying by spreading the measurement sample over the entire dish. In the preliminary drying, the measurement sample and toluene are heated and dissolved in a water bath at 70°C to 80°C so as to be evaporated and dried. After the preliminary drying, the main drying is performed using a hot air dryer at 105°C for 2 hours. The solid content (heating residue) is determined using the following equation based on the mass of the measurement sample before the preliminary drying (mass before drying) and the mass of the measurement sample after the main drying (mass after drying).

$$\text{Solid content (\% by mass)} = \text{mass after drying/mass before drying} \times 100$$

In a case where the antifouling coating material composition of the present invention is in a liquid state, the B type viscosity at 25°C is preferably 4000 mPa·s or less, and more preferably 2000 mPa·s or less. In a case where the B type viscosity of the antifouling coating material composition is less than or equal to the above-described upper limit, the antifouling coating material composition is easily applied.

The lower limit of the B type viscosity of the antifouling coating material composition is not particularly limited, but is preferably 100 mPa·s or greater from the viewpoint of the physical properties of the coating film.

The antifouling coating material composition of the present invention can be prepared by preparing the resin composition of the present invention as described above, adding an antifouling agent, an organic solvent, other components, and the like as necessary, and mixing the solution.

The antifouling coating material composition of the present invention can be used for forming a coating film (antifouling coating film) on a surface of a base material, for example, ships, various fishing nets, port facilities, underwater structures such as oil fences, bridges, and submarine bases.

The coating film formed of the antifouling coating material composition of the present invention can be formed on a surface of a base material directly or through a ground coating film.

As the ground coating film, a wash primer, a chlorinated rubber-based primer, or an epoxy-based primer, or an intermediate coating material can be used for forming the coating film.

The coating film can be formed using a known method. For example, the surface of the base material or the ground coating film on the base material is coated with the antifouling coating material composition by means of brush coating, spray coating, roller coating, or dip coating and dried, thereby forming a coating film.

The coating amount of the antifouling coating material composition can be typically set such that the thickness of the dried coating film is in a range of 10 to 400 μm. In a case where the coating amount is set such that the thickness thereof is in the above-described range, the durability of the coating film becomes excellent.

The coating film can be typically dried at room temperature and may be dried by being heated as necessary.

[Method of forming structure for stabilizing carbamate on surface of coating film]

According to the present invention, in a method (hereinafter, also referred to as a "method 1") of generating a structure for stabilizing a carbamate on the surface of the coating film, $CO_2$ is allowed to react with the surface of the coating film containing the polymer (A) in the presence of water to generate a structure for stabilizing a carbamate.

In a case where $CO_2$ is allowed to react with the surface of the coating film containing the polymer (A) in the presence of water, the reaction in which a structure for stabilizing a carbamate is generated from the structure (I) on the surface of the coating film occurs. As the result, for example, a zwitterionic structure is generated. In a case where a zwitterionic structure is formed, the hydrophilicity of the surface of the coating film is increased, the surface tension is decreased, and the wettability is increased. In this manner, the superhydrophilicity is exhibited.

The coating film containing the polymer (A) can be formed in the same manner as that for the coating film formed of the antifouling coating material composition of the present invention. Further, the resin composition may be used in place of the antifouling coating material composition of the present invention.

Examples of the method of reacting $CO_2$ with the surface of the coating film in the presence of water include a method of immersing the coating film in water in which $CO_2$ is dissolved (for example, sea water), a method of ventilating (bubbling) $CO_2$ in water in a state in which the coating film is immersed in water, and a method of immersing the coating film in carbonated water. Further, the concentration of saturated $CO_2$ in water is typically and approximately 300 ppm at 25°C at the atmospheric pressure.

$CO_2$ may be brought into contact with the surface of the coating film in the presence of water under conditions of 0°C to 50°C for 1 minute or longer. During the bubbling of $CO_2$, 1 mL/min or greater of $CO_2$ may be bubbled. The expression of "in the presence of water" indicates that water including the moisture and water vapor is present.

[Method of regenerating structure for stabilizing carbamate on surface of coating film]

According to the present invention, in a method (hereinafter, also referred to as a "method 2") of regenerating the structure for stabilizing a carbamate on the surface of the coating film, $CO_2$ is allowed to react with the surface of the coating film in the presence of water at the time of removal of the structure for stabilizing a carbamate which is generated on the surface of the coating film according to the method 1 so that the structure for stabilizing a carbamate is regenerated.

The surface on which a zwitterionic structure has been generated as the structure for stabilizing a carbamate

is easily affected by water due to high hydrophilicity, and the surface may collapse or be peeled off in water or the like and this may result in removal of the zwitterionic structure. Even in such a case, $CO_2$ is allowed to react with the surface of the remaining coating film in the presence of water so that the structure (I) is zwitterionized. In this manner, a zwitterionic structure is regenerated on the surface of the coating film and the superhydrophilicity can be exhibited again.

Examples of the method of reacting $CO_2$ with the surface of the coating film in the presence of water are the same as the methods described in the method 1.

The conditions for reacting $CO_2$ with the surface of the coating film in the presence of water are the same as the conditions described in the method 1.

[Examples]

Hereinafter, the present invention will be described in detail based on examples and comparative examples, but the present invention is not limited to these examples. Further, parts in the examples indicate parts by mass.

The evaluation in the examples was performed according to the following method.

(Number average molecular weight (Mn) and weight-average molecular weight (Mw))

The weight-average molecular weight (Mw) and the number average molecular weight (Mn) of the obtained polymer were measured under the following conditions according to the GPC measuring method.

Devices: "RID-1 0A/CBM-20A/DGU-20A3/LC-20AD/DPD-M20A/CTO-20A"
Column: "TSKgel superHM-N" (manufactured by Tosoh Corporation)
Detector: differential refractive index detector (RI detector/built-in)
Solvent: chloroform
Temperature: 40°C
Flow rate: 0.3 mL/min
Injection volume: 20 μL
Concentration: 0.1% by weight
Calibration sample: monodisperse polystyrene
Calibration method: polystyrene

(Number average molecular weight (Mn) and weight-average molecular weight (Mw) of Production Example 3)

The weight-average molecular weight (Mw) and the number average molecular weight (Mn) of the obtained polymer were measured under the following conditions according to the GPC measuring method.

The measurement was performed using gel permeation chromatography (GPC) (HLC-8320, manufactured by Tosoh Corporation). A tetrahydrofuran solution was prepared such that the concentration of the macromonomer was set to 0.2% by mass, 10 μl of the solution was injected into a device on which columns (TSKgel Super HZM-M×HZM-M×HZ2000, TSKguardcolumn SuperHZ-L) were mounted, and the measurement was carried out under conditions of a column temperature of 40°C at a flow rate of 0.35 ml/min using tetrahydrofuran (stabilizer BHT) as an eluent. The weight-average molecular weight (Mw) or the number average molecular weight (Mn) was calculated in terms of standard polystyrene.

($^1$H-NMR and $^{13}$C-NMR)

$^1$H-NMR and $^{13}$C-NMR were measured using JNM-ECX500 or Bruker Avance 600 (manufactured by JEOL Ltd.).

(Contact angle of coating film in water)

The contact angle of a cured film prepared on a polyethylene terephthalate (PET) film in water was measured using a contact angle meter DSA25 (manufactured by KRUSS) in a captive bubble mode, and a surface tension ysv and an interfacial tension γsw were measured based on the contact angles of bubbles and 10 μL of hexadecane according to the Owens-Wendlt method.

<Production Example 1: production of dispersant 1>

900 parts by deionized water, 60 parts of sodium 2-sulfoethyl methacrylate, 10 parts of potassium methacrylate, and 12 parts of methyl methacrylate (MMA) were put into a polymerization device provided with a stirrer, a cooling pipe, and a thermometer, and the mixture was stirred and heated to 50°C while replacing the inside of the polymerization

device with nitrogen. 0.08 parts of 2,2'-azobis(2-methylpropionamidine) dihydrochloride was added thereto as a polymerization initiator, and the mixture was further heated to 60°C. After the mixture was heated, MMA was continuously added dropwise thereto at a rate of 0.24 parts/min for 75 minutes using a dropping pump. The reaction solution was held at 60°C for 6 hours and cooled to room temperature, thereby obtaining a dispersant 1 having a solid content of 10% by mass which was a transparent aqueous solution.

<Production Example 2: Production of chain transfer agent 1>

1.00 g of cobalt acetate (II) tetrahydrate, 1.93 g of diphenyl glyoxime, and 80 ml of diethyl ether which had been deoxygenated by nitrogen bubbling in advance were put into a synthesizer provided with a stirrer, and the mixture was stirred at room temperature for 30 minutes. Next, 10 ml of a boron trifluoride diethyl ether complex was added thereto, and the mixture was further stirred for 6 hours. The mixture was filtered, and the solid was washed with diethyl ether and dried in a vacuum for 15 hours, thereby obtaining 2.12 g of a chain transfer agent 1 in the form of a reddish brown solid.

<Production Example 3: production of macromonomer 1>

145 parts of deionized water, 0.1 parts of sodium sulfate, and 0.25 parts of the dispersant 1 (solid content of 10% by mass) were put into a polymerization device provided with a stirrer, a cooling pipe, and a thermometer, and the mixture was stirred to obtain a uniform aqueous solution. Next, 100 parts of MMA, 0.004 parts of the chain transfer agent 1, and 0.40 parts of 1,1,3,3-tetramethylbutyl peroxy 2-ethylhexanoate (PEROCTA O (registered trademark), manufactured by NOF Corporation) was added thereto to obtain an aqueous suspension.

Thereafter, the inside of the polymerization device was replaced with nitrogen, heated to 80°C for the reaction for 1 hour, and heated to 90°C, and the state was held for 1 hour in order to increase the polymerization rate. Next, the reaction solution was cooled to 40°C to obtain an aqueous suspension containing a polymer. This aqueous suspension was filtered using nylon filter cloth having a pore size of 45 μm, and the filtrate was washed with deionized water and dehydrated, and dried at 40°C for 16 hours, thereby obtaining a macromonomer (1). The number average molecular weight of the macromonomer (1) was 3,000 and the weight-average molecular weight thereof was 7,000.

<Synthesis Example 1: synthesis of polymer P1>

3.00 g of glycidyl methacrylate (GMA) (manufactured by Tokyo Chemical Industry Co., Ltd.) was dissolved in 19.90 g of anisole (manufactured by Tokyo Chemical Industry Co., Ltd.), 21.7 mg of azobisisobutyronitrile (manufactured by Kanto Chemical Co., Inc.) was added thereto as an initiator, and the mixture was stirred at 70°C for 2 hours, polymerized, precipitated and purified using methanol, and dried in a vacuum at room temperature, thereby obtaining 1.50 g of polyglycidyl methacrylate (PGMA) of white powder (yield of 50% by mass). In this PGMA, Mn of the PGMA was 56,900 and Mw/Mn was 2.1 according to the molecular measurement using GPC, and the PGMA was soluble in dimethyl sulfoxide (DMSO), dimethylformaldehyde (DMF), chloroform, and acetone and insoluble in water and methanol.

Next, 0.200 g of PGMA was dissolved in 5.50 g of DMSO (manufactured by Kanto Chemical Co., Inc.), 2.45 g of N,N-diethylethylenediamine (manufactured by Tokyo Chemical Industry Co., Ltd.) was added thereto for the reaction at 80°C for 1 hour, the mixture was precipitated and purified using 360 g of diethyl ether and 328 g of hexane and then dried in a vacuum at room temperature, thereby obtaining an amine polymer (polymer P1) in the form of white powder formed by ring-opening an epoxy group. The ring opening of the quantitative epoxy group was supported by $^{1}$H-NMR. In this polymer P1, Mn of the polymer P1 was 89,300 and Mw/Mn was 2.9 measured by GPC, and the polymer P1 was soluble in water, methanol, chloroform, and toluene and insoluble in acetonitrile, diethyl ether, and hexane.

[Chem. 20]

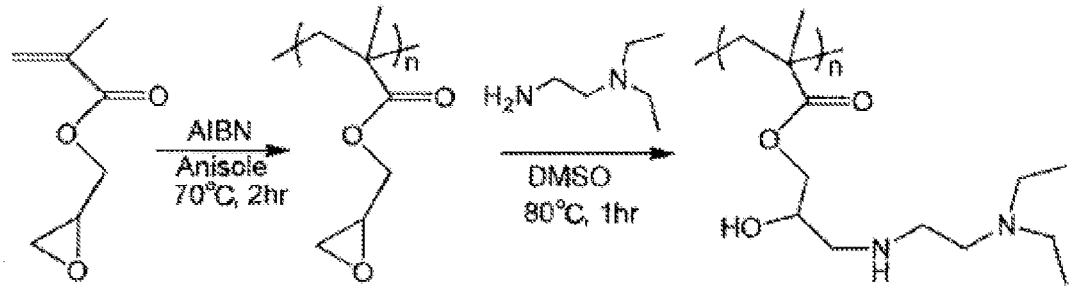


GMA PGMA P1

Carbon dioxide ventilation ($CO_2$ bubbling) was performed on the aqueous solution of the polymer P1 at a bubbling amount of 10 mL/min for 15 minutes. Based on $^1H$-NMR and $^{13}C$-NMR before and after the ventilation, it was confirmed that the zwitterionic species (polymer P1 (+-)) and dicationic species (polymer P1 (++)) shown in the following formulae were generated due to $CO_2$ bubbling. The measurement results of $^1H$-NMR and $^{13}C$-NMR are shown below.
$^1H$-NMR: before $CO_2$ ventilation 0.80-1.20 (b, 5H, $CH_2CCH_3$), 1.10 (b, 6H, $N(CH_2CH_3)_2$), 2.50-2.90 (b, 10H, $(CH_3CH_2)_2NCH_2CH_2NHCH_2$), 3.90-4.12(b, 3H, $COOCH_2CHOH$)

After $CO_2$ ventilation 0.80-1.20 (b, 5H, $CH_2CCH_3$), 1.32 (b, 6H, $N(CH_2CH_3)_2$), 3.25 (b, 4H, $N(CH_2CH_3)_2$, 3.36 (b, 2H, $(CH_3CH_2)_2NCH_2CH_2NH$), 3.46-3.80 (b, $NCH_2CH_2NCOO^-CH_2$), 4.02-4.20 (b, 3H, $COOCH_2CHOH$)
$^{13}C$-NMR: after $CO_2$ ventilation P1 (+-): 9.1 ($N(CH_2CH_3)_2$), 16.0-20.0 ($CH_2CCH_3$), 44.8-46.0 ($NCH_2CH_2NCOO^-CH_2CHOH$), 48.8 ($N(CH_2CH_3)_2$), 55.2 ($(CH_3CH_2)_2NCH_2CH_2NH$), 68.8($COOCH_2$), 164.8 (Carbamate), 180.0(ester)

After $CO_2$ ventilation P1(++): 8.6 ($N(CH_2CH_3)_2$), 16.0-20.0 ($CH_2CCH_3$), 43.2 $(CH_3CH_2)_2NCH_2CH_2N^+H_2$), 47.8 ($N(CH_2CH_3)_2$), 50.4-51.0 ($N^+H_2CH_2CHOH$), 52.0 ($(CH_3CH_2)_2NCH_2$, 68.8($COOCH_2$), 160.5($HCO_3^-$), 180.0 (ester)

Further, the ratio (molar ratio) between the polymer P1 (+-) and the polymer P1 (++) was confirmed to be 2:1 based on the integral ratio of $^{13}C$-NMR (release of nuclear Overhauser effect (NOE)).

[Chem. 21]

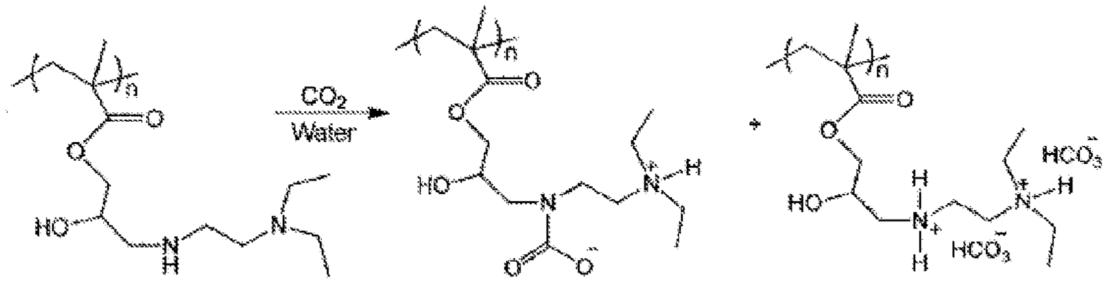


P1 P1 (+−) P1 (++)

<Synthesis Example 2: synthesis of polymer P4>

5.00 g of poly[(o-cresyl glycidyl ether)-co-formaldehyde] (Mn = 1,100) (manufactured by Sigma-Aldrich Co. LLC) was dissolved in 11.00 g of dimethyl sulfoxide, 7.37 g of N-(tert-butoxycarbonyl)-N'-methylethylenediamine (manufactured by Tokyo Chemical Industry Co., Ltd.) was added thereto for the reaction at 80°C for 15 hours, and the mixture was precipitated and purified using 750 g of diethyl ether and then dried in a vacuum at room temperature, thereby obtaining a yellow viscous polymer P2. In the polymer P2, the ring opening of the quantitative epoxy group was supported by $^1H$-NMR. The polymer P2 was soluble in acetone, ethyl acetate, and chloroform and insoluble in hexane, diethyl ether, and water.

1.50 g of the polymer P2 was dissolved in 14.90 g of trifluoroacetic acid (manufactured by Tokyo Chemical Industry Co., Ltd.), deprotected, precipitated and purified using 360 g of diethyl ether, thereby obtaining a white powdery polymer P3. The progress of the deprotection was supported by $^1H$-NMR, $^{13}C$-NMR, and $^{19}F$-NMR. The polymer P3 was soluble in methanol and water and insoluble in chloroform, acetone, and diethyl ether.

0.50 g of the polymer P3 was dissolved in 7.92 g of methanol, 3.00 g of a strong basic ion exchange resin

Amberlite (IRA900 OH AG) (manufactured by Organo Corporation) was added thereto, the mixture was stirred for 2 hours and neutralized, the resin was separated by filtration, the resultant was precipitated and purified using 214 g of diethyl ether and then dried in a vacuum at room temperature, thereby obtaining an amine polymer (polymer P4) in the form of a pale yellow solid. Mn of the polymer P4 was 2,600 and Mw/Mn was 1.8 measured by GPC, and the progress of the deprotection was supported by $^{1}$H-NMR, $^{13}$C-NMR, and $^{19}$F-NMR. The polymer P4 was soluble in methanol, ethanol, chloroform, and DMF and insoluble in water, acetone, and toluene.

[Chem. 22]

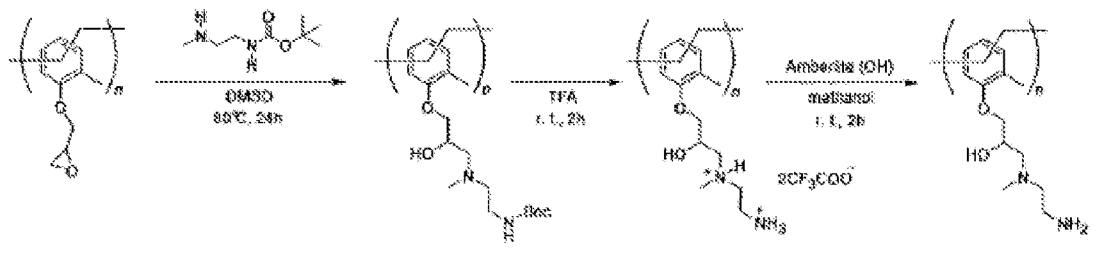


P2 P3 P4

<Synthesis Example 3: synthesis of polymer P5>

1.74 g of pyridine (manufactured by Tokyo Chemical Industry Co., Ltd.) and 1.50 g of 2-bromoethylammonium bromide (manufactured by Tokyo Chemical Industry Co., Ltd.) were refluxed in 23.60 g of acetonitrile (manufactured by Kanto Chemical Co., Inc.) for 5 hours, and the deposited solid was separated by filtration, thereby obtaining a white powdery compound C1.

1.19 g of the compound C1 was dissolved in 5.50 g of dimethyl sulfoxide, 0.47 g of trimethylamine was added dropwise thereto while the solution was vigorously stirred, and the resulting solution was neutralized, the deposited solid was removed, added to a polymer solution of 0.200 g of PGMA dissolved in 2.2 g of dimethyl sulfoxide for the reaction at 80°C for 15 hours, and the solution was precipitated and purified using 395 g of ethanol, thereby obtaining an amine polymer (polymer P5). The ring opening of the quantitative epoxy group was supported by $^{1}$H-NMR.

[Chem. 23]

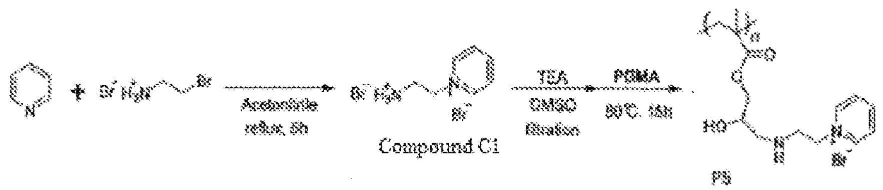


Compound C1

P5

<Examples 1 to 9 and Comparative Examples 1 and 2: preparation of cured film>

The polymer P1, the polymer P4, and the polymer P5, a bisphenol A glycidyl ether oligomer (Mn = 377) (manufactured by Sigma-Aldrich Co. LLC), diethylenetriamine (manufactured by Tokyo Chemical Industry Co., Ltd.), or trimethylolpropane tris(3-mercaptobutyrate) (manufactured by Showa Denko K.K.) as a crosslinking agent, and 2,4,6-tris(dimethylaminomethyl) phenol (manufactured by Sigma-Aldrich Co. LLC) as a catalyst were dissolved in 1-methoxy-2-propanol (manufactured by Kanto Chemical Co., Inc.) or methanol (manufactured by Kanto Chemical Co., Inc.) at the mass ratios listed in Tables 1 and 2 and stirred to prepare an antifouling coating material composition.

A PET substrate was bar-coated with this antifouling coating material composition, heated at room temperature for 24 hours, and further heated at 80°C for 3 hours, thereby preparing cured films of Examples 1 to 9. In Comparative Example 1, a coated film was prepared without using an amine polymer. Further, in Comparative Example 2, a coated film obtained by using polyallylamine (PAA) (manufactured by Nittobo Medical Co., Ltd.) as a general-purpose polymer was prepared in the same manner as described above.

The contact angles in water of the coating films (cured films or coated films) of Examples 1 to 9 and Comparative

Examples 1 and 2 were measured. Further, each coating film was immersed in a 1 M NaCl aqueous solution, $CO_2$ bubbling was performed for 15 minutes at a bubbling amount of 10 mL/min, and the contact angle of the coating film in water was measured again. The results thereof before and after the performance of $CO_2$ bubbles for 15 minutes are listed in Tables 1 to 3.

<Example 10>

Using a continuous load type surface property measuring device Heidon TYPE: 22 (manufactured by Shinto Scientific Co., Ltd.), a flat indenter (10 × 10 mm) in which a polished film (#4000, manufactured by Sankyo-Rikagaku Co., Ltd.) was attached was allowed to reciprocate 2000 times at a load of 450 g (4.4 N) to the surface of the coating film after the $CO_2$ bubbling for 15 minutes in Example 6, and the surface of the cured film was worn by a thickness of 1.8 μm. As the result, the contact angle of the surface in water was decreased to 158° from 169°. Thereafter, this cured film was immersed in a 1 M NaCl aqueous solution, and $CO_2$ bubbling was performed for 15 minutes at a bubbling amount of 10 mL/min. Therefore, the contact angle in water was recovered to 168°.

A cross section of the cured film of Example 6 after the $CO_2$ bubbling treatment was cut out according to the microtome method, and elemental distribution analysis was performed using a two-dimensional high-resolution secondary ion mass spectrometer (NanoSIMS 50L, manufactured by Cameca in AMETEK, Inc.). As the result, an increase in the relative carbon concentration and a decrease in the relative nitrogen concentration were observed in a region from the surface by a thickness of 1 μm, and thus the thickness at which the structure for stabilizing a carbamate was generated (regenerated) was estimated to be 1 μm.

<Synthesis Examples 4 and 5: synthesis of polymers P7 and P8>

2.22 g of pyridine (manufactured by Tokyo Chemical Industry Co., Ltd.) and 4.50 g of 2-bromoethylammonium bromide (manufactured by Tokyo Chemical Industry Co., Ltd.) were refluxed in 23.60 g of acetonitrile (manufactured by Kanto Chemical Co., Inc.) for 5 hours, and the deposited solid was separated by filtration, thereby obtaining white powder 8.

3.58 g of the obtained white powder 8 was dissolved in 6.50 g of dimethyl sulfoxide (manufactured by Kanto Chemical Co., Inc.), 1.41 g of trimethylamine was added dropwise thereto while the solution was vigorously stirred, and the resulting solution was neutralized. Thereafter, the deposited solid was removed, a polymer solution of 0.600 g of PGMA dissolved in 6.60 g of dimethyl sulfoxide and 0.735 g of N,N-diethylethylenediamine (manufactured by Tokyo Chemical Industry Co., Ltd.) were simultaneously added for the reaction at 80°C for 15 hours, and the solution was precipitated and purified using cosolvents of 395 g of ethanol and 357 g of diethyl ether, thereby obtaining yellow powder P7. The ring opening of the quantitative epoxy group was supported by $^{1}$H-NMR. Further, PGMA was added thereto in advance, the mixture was heated for 12 hours, N,N-diethylethylenediamine was added thereto, and the resulting mixture was further heated for 3 hours for the reaction, thereby obtaining yellow powder P8.

[Chem. 24]

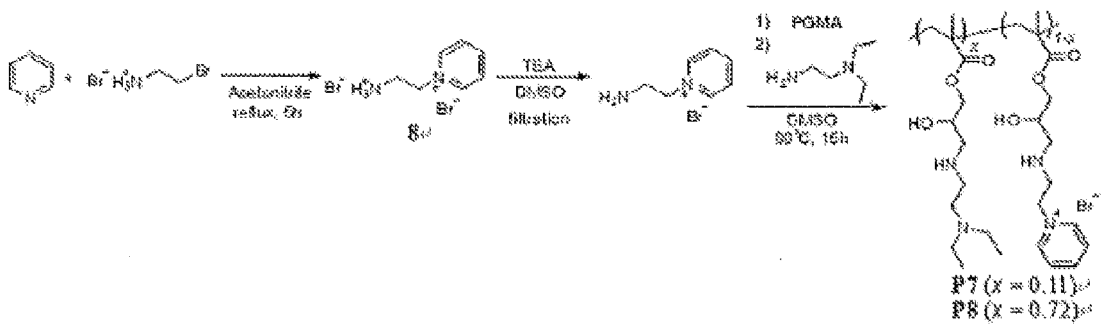


P7 (x = 0.11)
P8 (x = 0.72)

<Synthesis Example 6: synthesis of polymer P10>

0.500 g of polyglycidyl methacrylate (PGMA) was dissolved in 11.0 g of dimethyl sulfoxide, 1.83 g of N,N-diethylpropylenediamine (manufactured by Tokyo Chemical Industry Co., Ltd.) was added thereto for the reaction at 80°C for 15 hours, the mixture was precipitated and purified using 713 g of diethyl ether and then dried in a vacuum at room temperature, thereby obtaining a polymer P10 in the form of white powder formed by ring-opening an epoxy group.

[Chem. 25]

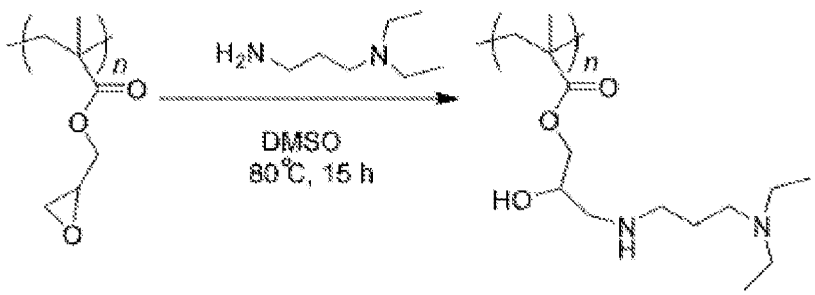


<Synthesis Example 7: synthesis of polymer P50>

A reaction container provided with a stirrer, a temperature adjuster, and a dropping funnel was charged with 47 parts of xylene and 3 parts of butyl n-acetate, and the mixture was heated to 90°C while being stirred. Next, a mixture formed of 60.5 parts of methyl methacrylate (MMA), 9.5 parts of ethyl acrylate (EA), 30 parts of glycidyl methacrylate (GMA), 20 parts of xylene, and 0.8 parts of 2,2-azobis(2-methylbutyronitrile) (AMBN) was added dropwise from the dropping funnel at a constant speed for 4 hours. After the dropwise addition, 6 parts of xylene was added thereto, 1.0 parts of t-butyl peroxy octoate and 10 parts of xylene were added dropwise for 1 hour, the resulting solution was further stirred for 1 hour, and 64 parts of industrial xylene was added thereto to obtain a solution-like resin composition having a solid content of 42.2% by mass and a viscosity of Z.

4.74 g of the obtained resin composition was dissolved in 49.5 g of dimethyl sulfoxide (manufactured by Kanto Chemical Co., Inc.), 3.71 g of N,N-diethylethylenediamine (manufactured by Tokyo Chemical Industry Co., Ltd.) was added thereto for the reaction at 80°C for 15 hours, and the solution was precipitated and purified to 1426 g of diethyl ether and then dried in a vacuum at room temperature, thereby obtaining white powder P50. The ring opening of the quantitative epoxy group was supported by $^1$H-NMR.

<Synthesis Example 8: synthesis of polymer P51>

A reaction container provided with a stirrer, a temperature adjuster, and a dropping funnel was charged with 40 parts of xylene and 10 parts of propylene glycol methyl ether (PGM), and the mixture was heated to 90°C while being stirred. Next, a mixture formed of 48 parts of methyl methacrylate (MMA), 2.0 parts of ethyl acrylate (EA), 50 parts of glycidyl methacrylate (GMA), 30 parts of propylene glycol monomethyl ether (PGM), and 0.6 parts of 2,2-azobis(2-methylbutyronitrile) (AMBN) was added dropwise from the dropping funnel at a constant speed for 4 hours. After the dropwise addition, 6 parts of xylene was added thereto, 1.0 parts of t-butyl peroxy octoate and 10 parts of xylene were added dropwise for 1 hour, the resulting solution was further stirred for 1 hour, and 67 parts of industrial xylene was added thereto to obtain a solution-like resin composition having a solid content of 40.0% by mass and a viscosity of Y.

5.00 g of the obtained resin composition was dissolved in 49.5 g of dimethyl sulfoxide, 5.76 g of N,N-diethylethylenediamine was added thereto for the reaction at 80°C for 15 hours, and the solution was precipitated and purified using 1426 g of diethyl ether and then dried in a vacuum at room temperature, thereby obtaining white powder P51.

<Synthesis Example 9: synthesis of polymer P52>

A reaction container provided with a stirrer, a temperature adjuster, and a dropping funnel was charged with 50 parts of propylene glycol monomethyl ether acetate (PMA), and the mixture was heated to 90°C while being stirred. Next, a mixture formed of 30 parts of methyl methacrylate (MMA), 70 parts of glycidyl methacrylate (GMA), 30 parts of propylene glycol monomethyl ether acetate (PMA), and 0.8 parts of 2,2-azobis(2-methylbutyronitrile) (AMBN) was added dropwise from the dropping funnel at a constant speed for 4 hours. After the dropwise addition, 31 parts of propylene glycol monomethyl ether acetate (PMA) was added thereto, 1.0 parts of t-butyl peroxy octoate and 10 parts of propylene glycol monomethyl ether acetate (PMA) were added dropwise for 1 hour, the resulting solution was further stirred for 1 hour, and 67 parts of propylene glycol monomethyl ether acetate (PMA) was added thereto to obtain a solution-like resin composition having a solid content of 36.7% by mass and a viscosity of+Z.

5.45 g of the obtained resin composition was dissolved in 49.5 g of dimethyl sulfoxide, 7.54 g of N,N-diethylethylenediamine was added thereto for the reaction at 80°C for 15 hours, and the solution was precipitated and purified using 1426 g of diethyl ether and then dried in a vacuum at room temperature, thereby obtaining white powder P52.

<Synthesis Example 10: synthesis of polymer P53>

A reaction container provided with a stirrer, a temperature adjuster, and a dropping funnel was charged with 40 parts of xylene and 10 parts of propylene glycol methyl ether (PGM), and the mixture was heated to 90°C while being stirred. Next, a mixture formed of 18 parts of methyl methacrylate (MMA), 2.0 parts of ethyl acrylate (EA), 50 parts of glycidyl methacrylate (GMA), 30 parts of X-22-174ASX (silicone macromer, manufactured by Shin-Etsu Chemical Co., Ltd.), 30 parts of propylene glycol monomethyl ether (PGM), and 0.4 parts of 2,2-azobis(2-methylbutyronitrile) (AMBN) was added dropwise from the dropping funnel at a constant speed for 4 hours. After the dropwise addition, 6 parts of xylene was added thereto, 1.0 parts of t-butyl peroxy octoate and 10 parts of xylene were added dropwise for 1 hour, the resulting solution was further stirred for 1 hour, and 67 parts of industrial xylene was added thereto to obtain a solution-like resin composition having a solid content of 38.1% by mass and a viscosity of Q.

5.25 g of the obtained resin composition was dissolved in 49.5 g of dimethyl sulfoxide, 5.76 g of N,N-diethylethylenediamine was added thereto for the reaction at 80°C for 15 hours, and the solution was precipitated and purified using cosolvents of 713 g of diethyl ether and 655 g of hexane and then dried in a vacuum at room temperature, thereby obtaining various diamine addition copolymers in the form of white powder P52.

<Synthesis Example 11: synthesis of polymer P53>

A reaction container provided with a stirrer, a temperature adjuster, and a dropping funnel was charged with 50 parts of propylene glycol monomethyl ether acetate (PMA), and the mixture was heated to 90°C while being stirred. Next, a mixture formed of 18 parts of methyl methacrylate (MMA), 2 parts of ethyl acrylate (EA), 50 parts of glycidyl methacrylate (GMA), 30 parts of the macromonomer (1), 30 parts of propylene glycol monomethyl ether acetate (PMA), and 0.5 parts of 2,2-azobis(2-methylbutyronitrile) (AMBN) was added dropwise from the dropping funnel at a constant speed for 4 hours. After the dropwise addition, 6 parts of propylene glycol monomethyl ether acetate (PMA) was added thereto, 1.0 parts of t-butyl peroxy octoate and 10 parts of propylene glycol monomethyl ether acetate (PMA) were added dropwise for 1 hour, the resulting solution was further stirred for 1 hour, and 67 parts of propylene glycol monomethyl ether acetate (PMA) was added thereto to obtain a solution-like resin composition having a solid content of 39.6% by mass and a viscosity of NO.

**[0236]** 5.05 g of the obtained resin composition was dissolved in 49.5 g of dimethyl sulfoxide, 5.76 g of N,N-diethylethylenediamine was added thereto for the reaction at 80°C for 15 hours, and the solution was precipitated and purified using 1426 g of diethyl ether and then dried in a vacuum at room temperature, thereby obtaining white powder P53.

<Synthesis Example 12: synthesis of polymer P9>

0.500 g of polyglycidyl methacrylate (PGMA) was dissolved in 11.0 g of dimethyl sulfoxide, 2.12 g of ethylenediamine (manufactured by Kanto Chemical Co., Inc.) was added thereto for the reaction at 80°C for 15 hours, the mixture was precipitated and purified using 713 g of diethyl ether and then dried in a vacuum at room temperature, thereby obtaining a polymer P9 in the form of white powder formed by ring-opening an epoxy group. The ring opening of the quantitative epoxy group was supported by $^1$H-NMR. The polymer P9 was insoluble in chloroform and 1-methoxy-2-propanol and soluble in dimethyl sulfoxide, methanol, ethanol, and water.

[Chem. 26]

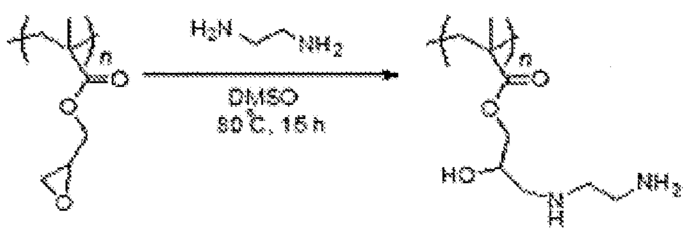


<Synthesis Example 13: synthesis of Pam$^+$>

3.00 g of glycidyl methacrylate (GMA) (manufactured by Tokyo Chemical Industry Co., Ltd.) was dissolved in 19.90 g of anisole (manufactured by Tokyo Chemical Industry Co., Ltd.), 21.7 mg of azobisisobutyronitrile (manufactured by Kanto Chemical Co., Inc.) was added thereto as an initiator, and the mixture was stirred at 70°C for 2 hours, polymerized,

precipitated and purified using methanol, and dried in a vacuum at room temperature, thereby obtaining 1.50 g of white powder PGMA (yield of 50%). In this PGMA, Mn of the PGMA was 56000 and Mn/Mn was 2.1 according to the molecular weight measurement using GPC, and the PGMA was soluble in DMSO, DMF, chloroform, and acetone and insoluble in water and methanol.

Next, 1.5 g of PGMA was dissolved in 10.00 g of dimethyl sulfoxide (manufactured by Kanto Chemical Co., Inc.), 8.46 g of N-(tert-butoxycarbonyl)-1,2-diaminoethane (manufactured by Tokyo Chemical Industry Co., Ltd.) was added thereto for the reaction at 80°C for 10 hours, the mixture was precipitated and purified using 750 g of diethyl ether and then dried in a vacuum at room temperature, thereby obtaining a yellow viscous liquid Pam-boc.

2 g of Pam-boc was dissolved in 11.79 g of acetonitrile (manufactured by Kanto Chemical Co., Inc.), 11.06 g of iodoethane (manufactured by Tokyo Chemical Industry Co., Ltd.) and 4.90 g of potassium carbonate (manufactured by Tokyo Chemical Industry Co., Ltd.) were added thereto for the reaction at 50°C for 12 hours, the solid was separated by filtration, the resulting mixture was precipitated and purified using 750 g of diethyl ether and then dried in a vacuum at room temperature, thereby obtaining a yellow viscous liquid Pam-boc$^+$.

2 g of the Pam-boc$^+$ was dissolved in 14.90 g of trifluoroacetic acid (manufactured by Tokyo Chemical Industry Co., Ltd.), deprotected, precipitated and purified using 360 g of diethyl ether, thereby obtaining white powder Pam-boc$^{2+}$. The progress of the deprotection was supported by $^1$H-NMR, $^{13}$C-NMR, and $^{19}$F-NMR. The Pam-boc$^{2+}$ was soluble in methanol and water and insoluble in chloroform, acetone, and diethyl ether.

An aqueous solution obtained by dissolving 1.26 g of sodium hydrogen carbonate (manufactured by Tokyo Chemical Industry Co., Ltd.) in 12.6 g of water was mixed with a polymer aqueous solution obtained by dissolving 1 g of Pam-boc$^{2+}$ in 10 g of water, the solution was stirred at room temperature for 1 hour and dialysis (-MWCO: 3500) was performed thereon, thereby obtaining Pam$^+$.

[Chem. 27]

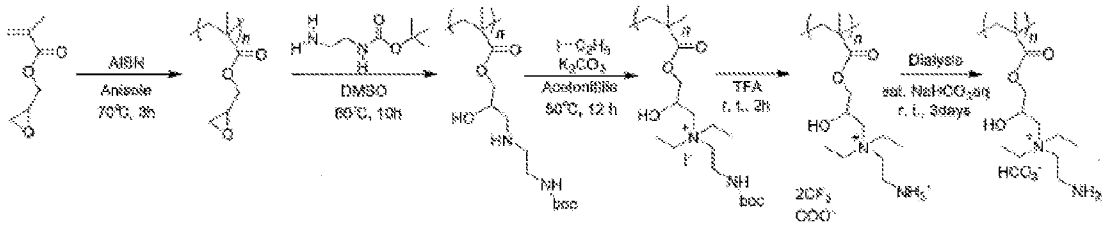


<Example 21>

After a metal can was charged with each component with the following formulation using the polymer P51, a mixture prepared by adding glass beads thereto and being mixed using a stirring rod in advance was pigment-dispersed using a rocking shaker, thereby obtaining an antifouling coating material composition.

P51: 10 parts
DISPARLON 4200-20 (manufactured by Kusumoto Chemicals, Ltd., antisagging agent): 1 part
Pyrithione copper: 2.1 parts
Propylene glycol monomethyl ether (PGM): 30 parts

<Synthesis Example 14: synthesis of polymer P11>

1.743 g of N,N-diethylethylenediamine was dissolved in 22.35 g of chloroform (manufactured by Kanto Chemical Co., Inc.), and the solution was cooled to 0°C in ice water. A solution obtained by dissolving 1.88 g of methacryloyl chloride (manufactured by Tokyo Chemical Industry Co., Ltd.) in 14.90 g of chloroform was slowly added dropwise to the diamine solution for 1 hour, and the reaction solution was further stirred at room temperature for 5 hours after the dropwise addition. The reaction solution was mixed with 110.3 g of a saturated aqueous solution in which 10.3 g of sodium hydrogen carbonate (manufactured by Tokyo Chemical Industry Co., Ltd.) was dissolved, the resulting solution was vigorously stirred for 1 hour, the chloroform layer was extracted by liquid separation, dehydration was performed using sodium sulfate (manufactured by Kanto Chemical Co., Inc.), and the resultant was dried in a vacuum at room temperature, thereby obtaining a yellow liquid 1. The identification of the product was supported by FAB-MS and $^1$H-NMR.

2.01 g of the obtained yellow liquid 1 was dissolved in 9.95 g of anisole (manufactured by Tokyo Chemical Industry Co., Ltd.), 11.1 mg of azobisisobutyronitrile (manufactured by Kanto Chemical Co., Inc.) was added thereto as an initiator, and the mixture was stirred at 70°C for 3 hours, polymerized, precipitated and purified using 713 g of diethyl ether, and dried in a vacuum at room temperature, thereby obtaining pale yellow powder P11. Mn of the powder P11

was 16800 and Mw/Mn was 1.7 according to the molecular weight measurement using GPC. The powder P11 was soluble in DMSO, DMF, chloroform, acetone, 1-methoxy-2-propanol, and methanol and insoluble in water.

[Chem. 28]

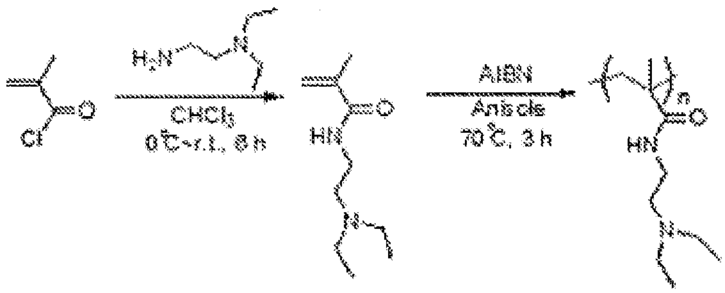


1

<Synthesis Example 15: synthesis of polymer p(AEAEMA)>

10.47 g of di-tert-butyl dicarbonate (manufactured by Tokyo Chemical Industry Co., Ltd.) was added to 2.49 g of a yellow liquid 2-(2-aminoethylamino) ethanol (manufactured by Tokyo Chemical Industry Co., Ltd.) in 106.4 g of dichloromethane (manufactured by Kanto Chemical Co., Inc.), the solution was stirred at 0°C for 3 hours in a nitrogen atmosphere and further stirred at room temperature for 24 hours, the deposited white solid was separated by filtration, and extracted with dichloromethane, thereby obtaining a transparent liquid (BocAEAE) (FAB-MS: found (305.23), calcd (305.38)).

2 g of the obtained BocAEAE and 1.85 g of trimethylamine (manufactured by Tokyo Chemical Industry Co., Ltd.) were added to 1.29 g of methacrylic acid chloride (manufactured by Tokyo Chemical Industry Co., Ltd.) in 22.6 g of dichloromethane, the solution was stirred at 0°C for 3 hours in a nitrogen atmosphere and further stirred at room temperature for 15 hours, the deposited white solid was separated by filtration, and extracted with dichloromethane, thereby obtaining a yellow viscous liquid (BocAEAEMA) (FAB-MS: found (373.30), calcd (373.23)) through column (silica gel (manufactured by Kanto Chemical Co., Inc.) chromatography (hexane:ethyl acetate = 4:1 (manufactured by Kanto Chemical Co., Inc.), $R_f$ = 0.20).

1 g of the obtained BocAEAEMA and 2.76 mg of 2,2'-azobis(isobutyronitrile) (manufactured by Tokyo Chemical Industry Co., Ltd.) were allowed to react in 4.98 g of anisole (manufactured by Tokyo Chemical Industry Co., Ltd.) at 70°C for 3 hours after degassing, and the resulting solution was precipitated and purified with hexane, thereby obtaining white powder (p(BocAEAEMA)) (Mn = 94000, $M_w/M_n$ = 1.9 (0.1 M LiCl GPC)).

372 mg of the obtained p(BocAEAEMA) was added to 5.36 g of trifluoroacetic acid (manufactured by Tokyo Chemical Industry Co., Ltd.) in 9.44 g of dichloromethane which had been cooled to 0°C, the solution was stirred at room temperature for 1 hour, the deposited transparent solid was recovered, and the resulting solution was precipitated and purified using ether, thereby obtaining white powder p(AEAEMA)$^{2+}$ as shown in 1) of the following formula.

An aqueous solution obtained by dissolving 12.6 g of sodium hydrogen carbonate (manufactured by Tokyo Chemical Industry Co., Ltd.) in 12.6 g of water was mixed with a polymer aqueous solution obtained by dissolving 300 mg of the obtained p(AEAEMA)$^{2+}$ in 5 g of water, the solution was stirred at room temperature for 1 hour and dialysis (MWCO: 3500) was performed thereon, thereby obtaining white powder p (AEAEMA) (Mn =69500, Mw/Mn = 1.5) as shown in 2) of the following formula.

[Chem. 29]

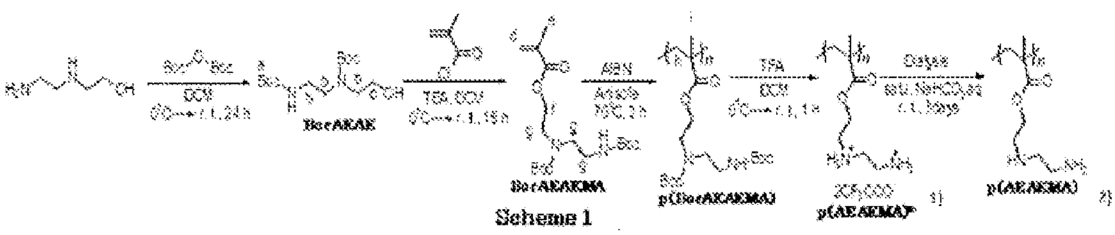


Scheme 1

[Table 1]

| | | | Example 1 | Example 2 | Example 3 | Example 4 | Example 5 | Example 6 |
|---|---|---|---|---|---|---|---|---|
| Type of amine polymer | | | P1 | P1 | P1 | P4 | P4 | P4 |
| Number average molecular weight of amine polymer (Mn) | | | (89300) | (89300) | (89300) | (2600) | (2600) | (2600) |
| Amine polymer | | % by mass | 13.1 | 1.1 | 4.2 | 6.9 | 1.2 | 3.2 |
| Bisphenol A glycidyl ether oligomer (Mn of 377) | | % by mass | 0.7 | 10.9 | 10.6 | 9.7 | 11.0 | 10.5 |
| Diethylenetriamine | | % by mass | 0 | 1.1 | 1.1 | 0 | 1.0 | 2.1 |
| Trimethylolpropane tris(3-mercaptobutyrate) | | % by mass | 0 | 0 | 0 | 6.3 | 0 | 0 |
| 2,4,6-tris (dimethylaminomethyl) phenol | | % by mass | 0.1 | 0.2 | 0.1 | 0.1 | 0.2 | 0.2 |
| Methanol | | % by mass | 86.1 | 86.7 | 84.0 | 77.0 | 86.6 | 84.0 |
| 1-methoxy-2-propanol | | % by mass | 0 | 0 | 0 | 0 | 0 | 0 |
| Chloroform | | % by mass | - | | | | | |
| Stirring time before coating | | Time | 0 | 0 | 0 | 0 | 0 | 0 |
| Contact angle in water φ Before $CO_2$ treatment | Bubbles | deg | 158 | 133 | 148 | 120 | 125 | 130 |
| | Hexadecane | deg | 144 | 120 | 130 | 103 | 114 | 115 |
| Surface tension in water ysv before $CO_2$ treatment | | mN/m | 67.8 | 51.9 | 63.4 | 43.9 | 46.0 | 50.8 |
| Surface tension between water and coated film γsw before $CO_2$ treatment | | mN/m | 0.34 | 2.13 | 1.63 | 7.51 | 4.36 | 4.00 |
| Contact angle in water φ After CO2 treatment[1)] | Bubbles | deg | 168 | 147 | 164 | 165 | 157 | 169 |
| | Hexadecane | deg | 159 | 140 | 160 | 160 | 118 | 161 |
| Surface tension in water γsv after $CO_2$ treatment[1)] | | mN/m | 71.3 | 62.1 | 70.2 | 70.3 | 69.6 | 71.5 |
| Surface tension between water and coated film γsw after $CO_2$ treatment[1)] | | mN/m | 0.01 | 0.52 | 0.04 | 0.33 | 2.82 | 0.01 |

(continued)

| | | | Example 1 | Example 2 | Example 3 | Example 4 | Example 5 | Example 6 |
|---|---|---|---|---|---|---|---|---|
| Contact angle in water φ After argon treatment2) | Bubbles | deg | 158 | - | - | - | - | 130 |
| | Hexadecane | deg | 144 | - | - | - | - | 116 |
| Surface tension in water γsv after argon treatment2) | | mN/m | 67.9 | | - | - | - | 50.6 |
| Surface tension between water and coated film γsw after argon treatment2) | | mN/m | 0.36 | | - | - | - | 3.76 |
| Contact angle in water φ (after $CO_2$ treatment - before $CO_2$ treatment) | Bubbles | | 10 | 14 | 16 | 45 | 32 | 39 |
| 1) $CO_2$ bubbling in 1 M NaCl aq for 15 minutes<br>2) Argon bubbling in 1 M NaCl aq for 15 minutes | | | | | | | | |

[Table 2]

| | | | Example 7 | Example 8 | Example 9 | Example 11 | Example 12 | Example 13 | Example 14 | Example 15 |
|---|---|---|---|---|---|---|---|---|---|---|
| Type of amine polymer | | | P4 | P5 | P4 | P7 | P8 | P10 | P50 | P51 |
| Number average molecular weight of amine polymer (Mn) | | | (2600) | (56900) | (2600) | (40100) | (40100) | (40100) | (10300) | (17600) |
| Amine polymer | | % by mass | 4.8 | 4.8 | 8.9 | 3.7 | 7.8 | 4.8 | 6.29 | 30 |
| Bisphenol A glycidyl ether oligomer (Mn of 377) | | % by mass | 16.2 | 16.2 | 8.9 | 9.3 | 3.1 | 16.2 | 0 | 0 |
| Diethylenetriamine | | % by mass | 4.6 | 4.6 | 0 | 2.5 | 2.1 | 4.6 | 0 | 0 |
| Trimethylolpropane tris(3-mercaptobutyrate) | | % by mass | 0 | 0 | 0 | 0 | 0 | 0 | 0 | 0 |
| 2,4,6-tris(dimethylaminomethyl)phenol | | % by mass | 0.2 | 0.2 | 0.1 | 0.1 | 0.1 | 0.2 | 0 | 0 |
| Methanol | | % by mass | 0 | 74.2 | 0 | 0 | 25.3 | 0 | 0 | 0 |
| 1-methoxy-2-propanol | | % by mass | 74.2 | 0 | 0 | 0 | 52.9 | 74.2 | 0 | 70 |
| Chloroform | | % by mass | | - | - | - | - | - | 93.7 | - |
| Stirring time before coating | | Time | 4 | 4 | 0 | 4 | 4 | 4 | 0 | 0 |
| Contact angle in water φ Before $CO_2$ treatment | Bubbles | deg | 144 | 157 | 152 | 145 | 147 | 138 | 146 | 139 |
| | Hexadecane | deg | 141 | 155 | 150 | 141 | 140 | 129 | 127 | 145 |
| Surface tension in water γsv before $CO_2$ treatment | | mN/m | 59.4 | 67.1 | 67.2 | 60.2 | 61.6 | 55.8 | 62.4 | 56.2 |
| Surface tension between water and coated film γsw before $CO_2$ treatment | | mN/m | 0.68 | 0.13 | 0.13 | 0.59 | 0.55 | 1.50 | 2.13 | 1.42 |
| Contact angle in water φ After $CO_2$ treatment[1)] | Bubbles | deg | 169 | 170 | 169 | 166 | 167 | 153 | 163 | 169 |
| | Hexadecane | deg | 170 | 169 | 165 | 154 | 157 | 144 | 162 | 162 |
| Surface tension in water γsv after $CO_2$ treatment[1)] | | mN/m | 71.4 | 71.8 | 71.2 | 70.7 | 71 | 65.2 | 69.7 | 71.6 |

(continued)

| | | | Example 7 | Example 8 | Example 9 | Example 11 | Example 12 | Example 13 | Example 14 | Example 15 |
|---|---|---|---|---|---|---|---|---|---|---|
| Surface tension between water and coated film γsw after $CO_2$ treatment[1)] | | mN/m | 0.09 | 0.06 | 0.03 | 0.04 | 0.02 | 0.31 | 0.09 | 0.01 |
| Contact angle in water φ After argon treatment[2)] | Bubbles | deg | - | - | - | - | - | - | - | - |
| | Hexadecane | deg | - | - | - | - | - | - | - | - |
| Surface tension in water ysv after argon treatment[2)] | | mN/m | | - | - | - | - | - | - | - |
| Surface tension between water and coated film γsw after argon treatment[2)] | | mN/m | | - | - | - | - | - | - | - |
| Contact angle in water φ (after $CO_2$ treatment-before $CO_2$ treatment) | Bubbles | | 25 | 13 | 17 | 21 | 20 | 15 | 17 | 30 |

1) $CO_2$ bubbling in 1 M NaCl aq for 15 minutes
2) Argon bubbling in 1 M NaCl aq for 15 minutes

[Table 3]

| | | | Example 16 | Example 17 | Example 18 | Example 19 | Example 20 | Example 21 | Comparative Example 1 | Comparative Example 2 | Comparative Example 3 | Comparative Example 4 |
|---|---|---|---|---|---|---|---|---|---|---|---|---|
| Type of amine polymer | | | P52 | P53 | P54 | P9 | Pam+ | P51 | - | PAA | P11 | p(AEAEMA) |
| Number average molecular weight of amine polymer (Mn) | | | (10000) | (12000) | (5700) | (36000) | (56900) | - | - | (3000) | (16800) | (61500) |
| Amine polymer | | % by mass | 30.3 | 30 | 30 | 2.94 | 2.94 | 10 | - | 2.6 | 4.8 | 2.94 |
| Bisphenol A glycidyl ether oligomer (Mn of 377) | | % by mass | 2.8 | 0 | 0 | 10.0 | 10.0 | 0 | 17.0 | 1.1 | 16.2 | 10.0 |
| Diethylenetriamine | | % by mass | 0 | 0 | 0 | 2.8 | 2.8 | 0 | 4.8 | - | 4.6 | 2.8 |
| Trimethylolpropane tris(3-mercaptobutyrate) | | % by mass | 0 | 0 | 0 | - | - | 0 | - | - | - | - |
| 2,4,6-tris (dimethylaminomethyl) phenol | | % by mass | 0.1 | 0 | 0 | 0.1 | 0.1 | 0 | 0.2 | 0.1 | 0.2 | 0.1 |
| Methanol | | % by mass | 0 | 0 | 0 | 38.8 | 38.8 | 0 | - | - | - | 38.8 |
| 1-methoxy-2-propanol | | % by mass | 66.8 | 70 | 70 | 45.3 | 45.3 | 30 | 78.0 | 96.2 | 74.2 | 45.3 |
| Chloroform | | % by mass | - | - | - | - | - | 0 | - | - | - | - |
| Copper pyrithione | | | - | - | - | - | - | 2.1 | - | - | - | - |
| DISPARLON 4200-20 | | | - | - | - | - | - | 1 | - | - | - | - |
| Stirring time before coating | | Time | 0 | 0 | 0 | 1 | 1 | 0 | 4 | 0 | 4 | 0 |
| Contact angle in water φ Before $CO_2$ treatment | Bubbles | deg | 139 | 138 | 141 | 151 | 157 | 139 | 131 | 147 | 144 | 149 |
| | Hexadecane | deg | 135 | 133 | 141 | 149 | 152 | 145 | 124 | 156 | 141 | 140 |

(continued)

| | | | Example 16 | Example 17 | Example 18 | Example 19 | Example 20 | Example 21 | Comparative Example 1 | Comparative Example 2 | Comparative Example 3 | Comparative Example 4 |
|---|---|---|---|---|---|---|---|---|---|---|---|---|
| Surface tension in water γsv before $CO_2$ treatment | | mN/m | 55.8 | 55.4 | 62.6 | 63.9 | 67.1 | 56.2 | 50.3 | 62.1 | 59.3 | 62.8 |
| Surface tension between water and coated film γsw before $CO_2$ treatment | | mN/m | 1.14 | 1.23 | 0.91 | 0.30 | 0.12 | 1.42 | 2.42 | 0.85 | 0.69 | 0.53 |
| Contact angle in water φ After $CO_2$ treatment[1)] | Bubbles | deg | 166 | 165 | 165 | 169 | 170 | 169 | 135 | 153 | 151 | 156 |
| | Hexadecane | deg | 162 | 160 | 164 | 170 | 169 | 162 | 125 | 152 | 145 | 163 |
| Surface tension in water ysv after $CO_2$ treatment[1)] | | mN/m | 70.7 | 70.4 | 72.1 | 70.9 | 71.8 | 71.6 | 53.7 | 64.9 | 64.0 | 66.6 |
| Surface tension between water and coated film γsw after $CO_2$ treatment[1)] | | mN/m | 0.03 | 0.03 | 0.06 | 0.08 | 0.06 | 0.01 | 2.02 | 0.25 | 0.30 | 0.39 |
| Contact angle in water φ After argon treatment[2)] | Bubbles | deg | - | - | - | - | - | - | - | - | - | - |
| | Hexadecane | deg | - | - | - | - | - | - | - | - | - | - |
| Surface tension in water γsv after argon treatment[2)] | | mN/m | | - | - | - | - | - | - | - | - | - |
| Surface tension between water and coated film γsw after argon treatment[2)] | | mM/m | | - | - | - | - | - | - | - | - | - |

(continued)

| | | | Example 16 | Example 17 | Example 18 | Example 19 | Example 20 | Example 21 | Comparative Example 1 | Comparative Example 2 | Comparative Example 3 | Comparative Example 4 |
|---|---|---|---|---|---|---|---|---|---|---|---|---|
| Contact angle in water φ (after $CO_2$ (treatment - before $CO_2$ treatment) | Bubbles | | 27 | 27 | 24 | 18 | 13 | 30 | 4 | 6 | 7 | 7 |
| 1) $CO_2$ bubbling in 1 M NaCl aq for 15 minutes<br>2) Argon bubbling in 1 M NaCl aq for 15 minutes | | | | | | | | | | | | |

<Examples 11 to 21 and Comparative Examples 3 and 4: preparation of cured film>

The polymers P7 to P10, the polymers P50 to P54, Pam$^+$, a bisphenol A glycidyl ether oligomer (Mn = 377) (manufactured by Sigma-Aldrich Co. LLC), diethylenetriamine (manufactured by Tokyo Chemical Industry Co., Ltd.), or trimethylolpropane tris(3-mercaptobutyrate) (manufactured by Showa Denko K.K.) as a crosslinking agent, and 2,4,6-tris(dimethylaminomethyl) phenol (manufactured by Sigma-Aldrich Co. LLC) as a catalyst were dissolved in 1-methoxy-2-propanol (manufactured by Kanto Chemical Co., Inc.) or methanol (manufactured by Kanto Chemical Co., Inc.) or chloroform at the mass ratios listed in Tables 2 and 3 and stirred to prepare an antifouling coating material composition.

A PET substrate was bar-coated with this antifouling coating material composition, heated at room temperature for 24 hours, and further heated at 80°C for 3 hours, thereby preparing cured films of Examples 11 to 21. In Comparative Example 3, a coated film was prepared using P11. Further, in Comparative Example 4, a coated film using p(AEAEMA) was similarly prepared.

The contact angles in water of the coating films (cured films or coated films) of Examples 11 to 21 and Comparative Examples 3 and 4 were measured. Further, each coating film was immersed in a 1 M NaCl aqueous solution, $CO_2$ bubbling was performed for 15 minutes at a bubbling amount of 10 mL/min, and the contact angle of the coating film in water was measured again. The results thereof before and after the performance of $CO_2$ bubbles for 15 minutes are listed in Tables 2 and 3.

In each of the coating films of Examples 1 to 20 containing amine polymers (polymers P1, P4, P5, P7 to P10, and P50 to P54) having the structure (I), it is considered that each coating film has an excellent antifouling function since the contact angle of the surface in water after the $CO_2$ bubbling is high. Further, a difference in contact angle in water before and after addition of $CO_2$ is high, the water resistance is also excellent.

Industrial Applicability

The polymer and the resin composition of the present invention can be used for an antifouling coating material composition. Particularly, an excellent function in which the surface layer of the coating film is hydrophilized due to $CO_2$ in sea water and exhibits the antifouling properties can be exhibited. Therefore, the present invention is an industrially very useful invention.

## Claims

1. A polymer having a structure which reacts with $CO_2$ in the presence of water and stabilizes a formed carbamate, wherein Expression (1) is satisfied.

$$\text{Contact angle in water after reaction with } CO_2 - \text{contact angle in water before reaction with } CO_2 \geq 10 \cdots \text{Expression (1)}$$

2. The polymer according to claim 1,
wherein the structure which reacts with $CO_2$ and stabilizes a formed carbamate is represented by Formula (I-1),

[Chem. 1]

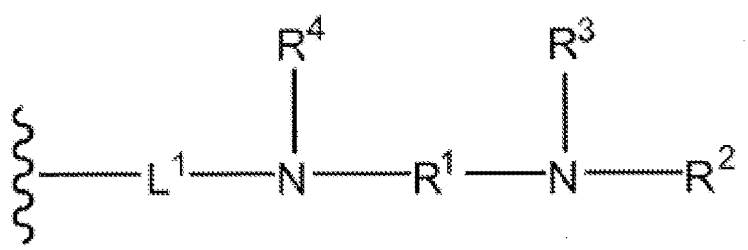

... (I-1)

in the formula, $L^1$ represents an alkylene group or phenylene group each of which may have a substituent and may

be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.

**3.** The polymer according to claim 1,
wherein the structure which reacts with $CO_2$ and stabilizes a formed carbamate is represented by Formula (1-2) and/or Formula (1-3),

[Chem. 2]

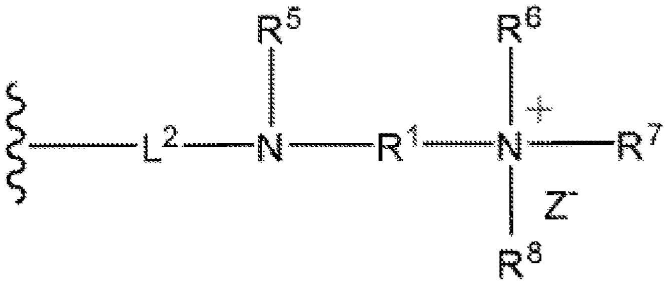

• • • (I − 2)

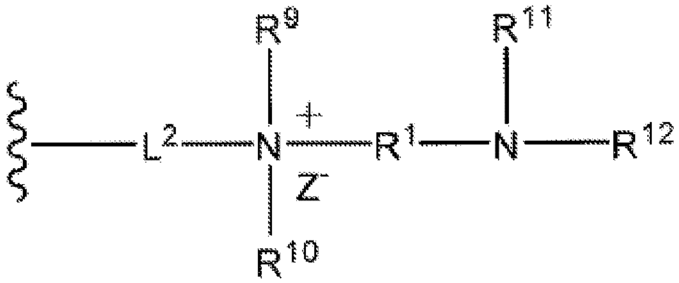

• • • (I − 3)

in the formulae, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

**4.** A polymer having a structure (I) represented by Formula (1-1),

[Chem. 3]

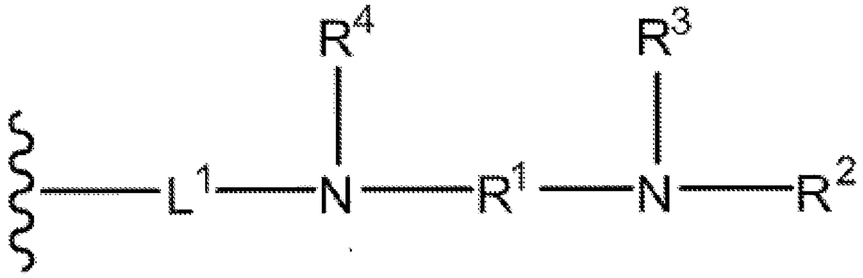

・・・ (I－1)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent.

**5.** A polymer having a structure (I) represented by Formula (1-2) and/or Formula (1-3),

[Chem. 4]

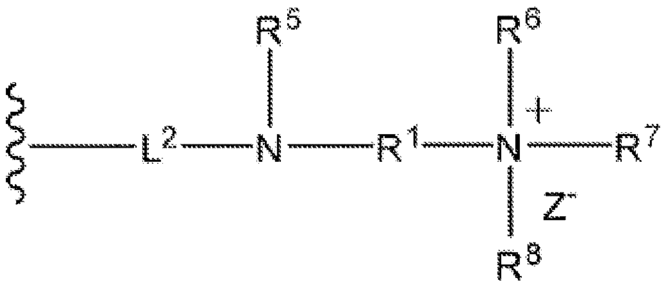

・・・(I－2)

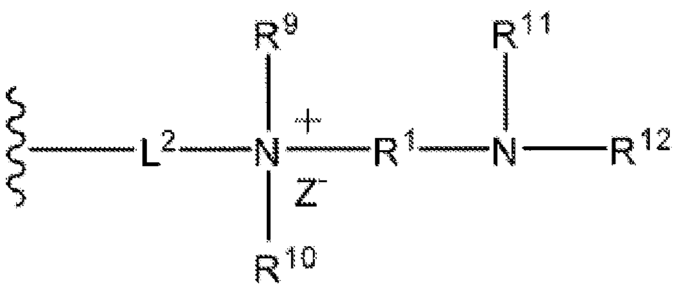

・・・(I－3)

in the formulae, $L^2$ represents an alkylene group or phenylene group each of which may have a substituent and may be linear or branched, examples of the substituent of the alkylene group or phenylene group include an alkyl

group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S- between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

**6.** The polymer according to claim 2 or 4,
wherein at least one of $R^2$ to $R^4$ in Formula (1-1) represents a hydrogen atom.

**7.** The polymer according to any one of claims 1 to 6, which is a (meth)acrylic polymer or a novolac polymer.

**8.** A resin composition comprising:
the polymer according to any one of claims 1 to 7.

**9.** An antifouling coating material composition comprising:
the resin composition according to claim 8.

**10.** The antifouling coating material composition according to claim 9, further comprising:
an antifouling agent.

**11.** The antifouling coating material composition according to claim 10,
wherein the antifouling agent contains at least one selected from the group consisting of cuprous oxide, pyridine triphenyl borane,
4,5-dichloro-2-n-octyl-4-isothiazolin-3-one,
4-bromo-2-(4-chlorophenyl)-5-(trifluoromethyl)-1H-pyrrole-3-carbonitrile, and medetomidine.

**12.** The antifouling coating material composition according to any one of claims 9 to 11, further comprising:
a thermoplastic resin other than the polymer.

**13.** The antifouling coating material composition according to any one of claims 9 to 12, further comprising:
a silicone oil.

**14.** A method for producing a polymer, comprising:

polymerizing a monomer mixture containing the following monomer (m1) to obtain the following polymer (A),
wherein the polymer (A) is a polymer having a structure (I) represented by Formula (I-1) and/or (1-2) and/or (I-3), and
the monomer (m1) is a monomer having the structure (1),

[Chem. 5]

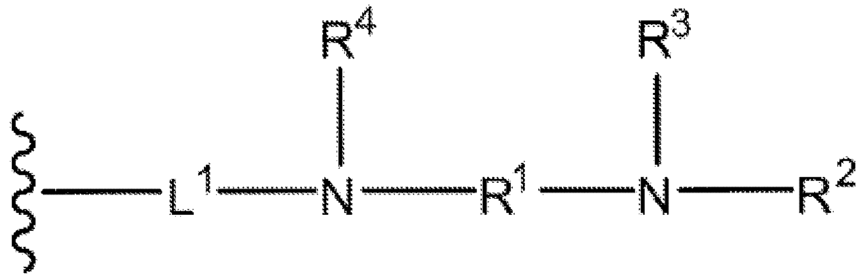

・・・(I-1)

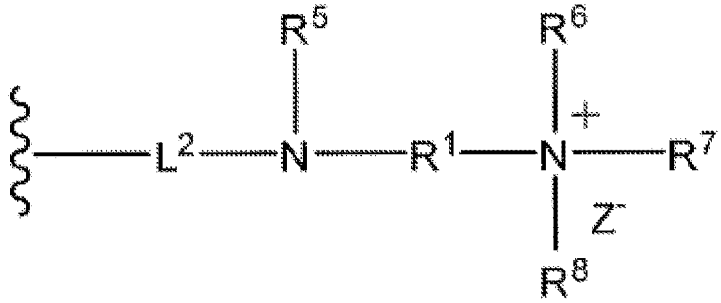

・・・(I-2)

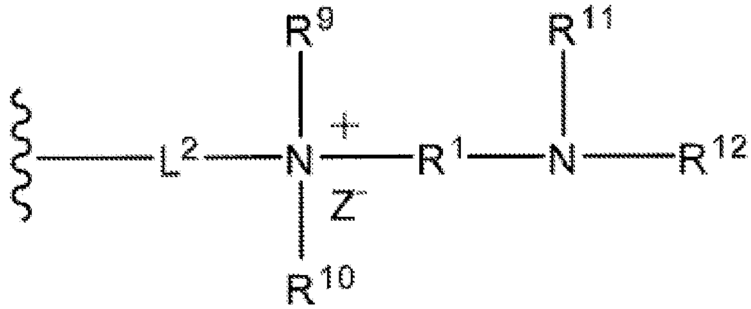

・・・(I-3)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S-between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having

-O- or -N- between carbon atoms of an alkylene group, or a phenylene group each of which may have a substituent, and $Z^-$ represents a counter anion.

**15.** A method for producing a polymer, comprising:

reacting an epoxy group of the following polymer (A0) with the following compound (1) to obtain the following polymer (A),
wherein the polymer (A) is a polymer having a structure (I) represented by Formula (I-1) and/or (I-2) and/or (I-3),
the polymer (A0) is a polymer containing an epoxy group, and
the compound (1) is a compound which is capable of reacting with an epoxy group,

[Chem. 6]

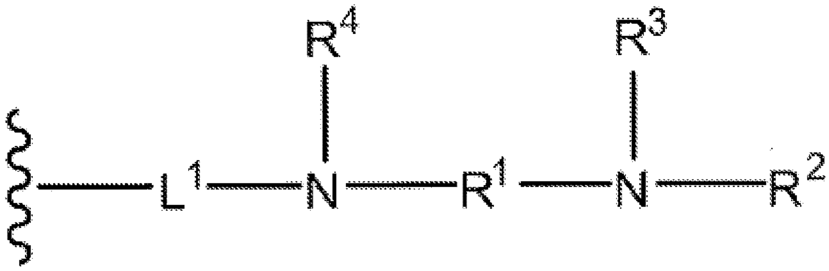

• • • (I − 1)

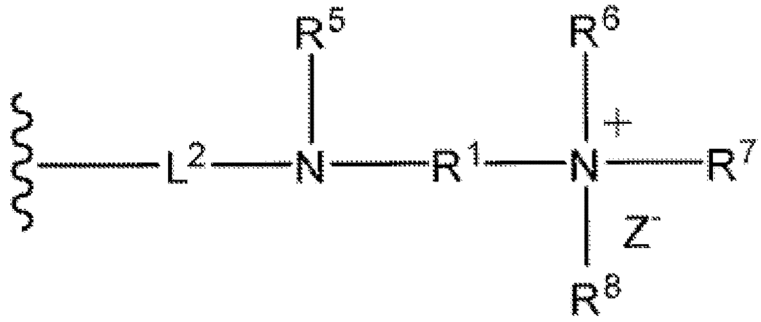

• • • (I − 2)

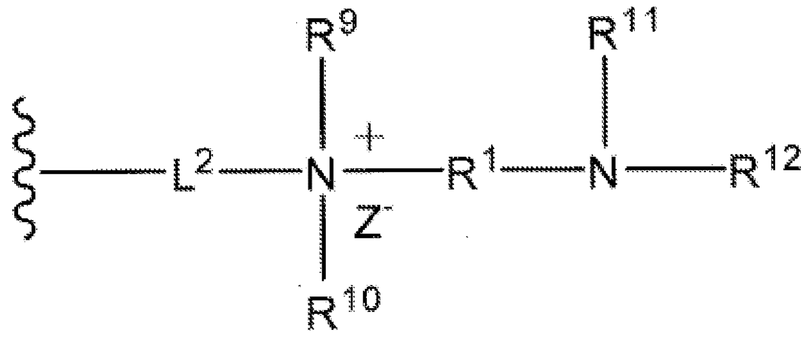

• • • (I − 3)

in the formula, $L^1$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^1$ represents an alkylene group or a group having -O- or -S-between carbon atoms of an alkylene group each of which may have a substituent, $R^2$ to $R^4$ each independently represent a hydrogen atom or an alkyl group, alkoxy group, or phenyl group each of which may have a substituent, or one of $R^2$ to $R^4$ represents a hydrogen atom or an alkyl group, alkoxy group, or phenyl group each of which may have a substituent, and

other two of $R^2$ to $R^4$ are bonded to each other to form an alkylene group, a group having -O- or -N- between carbon atoms of an alkylene group, a phenylene group each of which may have a substituent, or a heterocycle which may have a substituent, and in a case where $L^1$ represents an alkylene group or phenylene group each of which does not have a substituent, at least one of $R^2$ to $R^4$ represents an alkyl group, alkoxy group, or phenyl group each of which may have a substituent, $L^2$ represents an alkylene group or phenylene group each of which may have a substituent and may be linear or branched, examples of the substituent of the alkylene group or phenylene group include an alkyl group, an aryl group, a carboxyl group, an alkoxycarbonyl group, a cyano group, a hydroxyl group, an amide group, a halogen, an allyl group, an epoxy group, an alkoxy group, a siloxy group, and a hydrophilic or ionic group, $R^5$ represents a hydrogen atom or an alkyl group, alkoxy group, or phenyl group each of which may have a substituent, $R^6$ to $R^8$ each independently represent a hydrogen atom or an alkyl group, alkoxy group, or phenyl group each of which may have a substituent, or $R^6$ to $R^8$ are bonded to one another to form a heterocycle which may have a substituent, $R^9$ and $R^{10}$ represent an alkylene group or a group having -O- or -S-between carbon atoms of an alkylene group each of which may have a substituent, or $L^2$, $R^9$, and $R^{10}$ are bonded to one another to form a heterocycle which may have a substituent, $R^{11}$ and $R^{12}$ each independently represent a hydrogen atom or an alkyl group, alkoxy group, or phenyl group each of which may have a substituent, or $R^{11}$ and $R^{12}$ are bonded to each other to form an alkylene group, a group having -O- or -N- between carbon atoms of an alkylene group, or a phenylene group each of which may have a substituent, and $Z^-$ represents a counter anion.

**16.** A method for forming a structure for stabilizing a carbamate, comprising:
bringing $CO_2$ into contact with a surface of a coating film which contains the polymer according to any one of claims 1 to 7 in the presence of water.

**17.** A method for regenerating a structure for stabilizing a carbamate, comprising:
bringing $CO_2$ into contact with a surface of a coating film in the presence of water in a case where the structure for stabilizing a carbamate which has been formed on the surface of the coating film using the method according to claim 16 is removed.

## INTERNATIONAL SEARCH REPORT

International application No.
PCT/JP2017/042272

A. CLASSIFICATION OF SUBJECT MATTER
Int. Cl. C08F8/32(2006.01)i, C08F20/32(2006.01)i, C08G8/28(2006.01)i, C09D5/16(2006.01)i, C09D7/40(2018.01)i, C09D133/00(2006.01)i, C09D161/10(2006.01)i

According to International Patent Classification (IPC) or to both national classification and IPC

B. FIELDS SEARCHED

Minimum documentation searched (classification system followed by classification symbols)
Int.Cl. C08F8/32, C08F20/32, C08G8/28, C09D5/16, C09D7/40, C09D133/00, C09D161/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 62-176547 A (MITSUBISHI CHEMICAL INDUSTRIES LTD.) 03 August 1987, claims, embodiments (Family: none) | 1, 3, 5, 7, 8, 15<br>2, 4, 6, 9-14, 16, 17 |
| X<br>A | US 2712015 A (BRUSON, H. A. et al.) 28 June 1955, claims, embodiments (Family: none) | 1, 2, 4, 6, 8, 14<br>3, 5, 7, 9-13, 15-17 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| | |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.
PCT/JP2017/042272

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-342504 A (OTSUKA CHEMICAL CO., LTD.) 30 November 1992, claims, embodiments & JP 6-080732 A | 1-17 |
| A | JP 2-036211 A (DIRECTOR GENERAL, AGENCY OF INDUSTRIAL SCIENCE AND TECHNOLOGY) 06 February 1990, claims (Family: none) | 1-17 |
| P, A | 須賀健雄,小林松太郎,佐橋祐亮,西出宏之,水中での自発的 CO2 固定に基づく超親水性コーーティングの創出,高分子学会予稿集, 15 May 2017, vol. 66, no. 1, 1F19 non-official translation (SUGA, Takeo, KOBAYASHI, Shotaro, SAHASHI, Yusuke, NISHIIDE, Hiroyuki, Creation of superhydrophilic coating based on spontaneous CO2 fixation in water, Polymer Preprints, Japan) | 1-17 |

Form PCT/ISA/210 (continuation of second sheet) (January 2015)

**INTERNATIONAL SEARCH REPORT**

International application No. PCT/JP2017/042272

(Subject of examination)

Claim 1 sets forth a polymer that reacts with $CO_2$ in the presence of water, has a structure that stabilizes a carbamate formed, and satisfies formula (1). The description, however, only shows structures represented by formulae (1-1), (1-2), and (1-3) as specific examples of structures that stabilize the carbamate formed, and discloses neither chemical structures nor methods of production for other polymers.

It is difficult to predict, from the structure of a polymer, the contact angle before the polymer and $CO_2$ are reacted and the contact angle after the reaction with $CO_2$. Grounds therefore cannot be found for extending or generalizing the content disclosed in the description as far as the scope of the invention as in claim 1, which specifies a polymer that reacts with $CO_2$ in the presence of water, has a structure that stabilizes a carbamate formed, and satisfies formula (1).

As such, the invention as in claim 1 exceeds the scope disclosed in the description, and therefore does not meet the requirements for support stipulated in PCT Article 6.

Polymers having a structure other than represented by formula (1-1), (1-2), or (1-3) that stabilizes the carbamate formed accordingly cannot not be meaningfully examined, and thus were not examined.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016229585 A
- JP 2017118169 A
- JP H04342504 B
- JP 2007077431 A
- WO 2013108880 A
- WO 2016167360 A


### Non-patent literature cited in the description


- **HIGAKI.** Versatile inhibition of marine organism settlement by zwitterionic polymer brushes. *Polymer Journal,* 2015, vol. 47, 811-818